# EUROPEAN PATENT APPLICATION

(11) **EP 4 836 465 A1**
(43) Date of publication of application: **04.11.2026**
(21) Application number: 25900177.4
(22) Date of filing: 13.11.2025
(51) Int. Cl.: H04W 8/18

(54) **ESIM RECOGNITION METHOD, AND RELATED APPARATUS**

(30) Priority: 02.12.2024 CN 202411764711
(71) Applicant: Huawei Technologies Co., Ltd., Shenzhen, Guangdong 518129 (CN)
(72) Inventor: GAO, Hongxing, Shenzhen, Guangdong 518129 (CN); GENG, Xiaoyong, Shenzhen, Guangdong 518129 (CN)
(74) Representative: Huawei European IPR
(86) International application number: PCT/CN2025/134837
(87) International publication number: WO 2026/118826

(57) **Abstract**

This application discloses an eSIM identification method and a related apparatus. The method includes: powering on a first subscriber identity module SIM card; and powering off the first SIM card when detecting that the first SIM card is a physical SIM card and detecting first information of the first SIM card, where the first information indicates that the first SIM card is an eSIM card. In this way, the eSIM card used by an electronic device can be effectively identified, and then the eSIM card is managed and controlled.

## Description

This application claims priority to Chinese Patent Application No. 202411764711.6, filed with the China National Intellectual Property Administration on December 2, 2024 and entitled "ESIM IDENTIFICATION METHOD AND RELATED APPARATUS", which is incorporated herein by reference in its entirety.

### TECHNICAL FIELD

This application relates to the field of electronic technologies, and in particular, to an eSIM identification method and a related apparatus.

### BACKGROUND

A mobile communication device may access a mobile communication network based on user identity authentication of a subscriber identity module (Subscriber Identity Module, SIM). A conventional SIM card needs to be issued and activated by a mobile operator in advance, and can be used only after being inserted into a physical card slot of an electronic device after being issued and activated. Data communication services such as making a call, answering a call, and sending and receiving SMS messages may be implemented based on the SIM card. After a user uses the conventional SIM card, a key configuration file in the SIM card cannot be updated.

With development of mobile communication technologies, an embedded SIM (Embedded SIM, eSIM) card is proposed based on the conventional SIM card. Compared with the conventional SIM card, the eSIM card is programmable. The eSIM card may be remotely configured by using an over-the-air (Over-the-Air, OTA) technology, to implement functions such as remote card issuing, activation, and deactivation.

However, currently, there is a requirement that an eSIM cannot be used in some regions. For this requirement, how to manage and control the eSIM needs to be further studied.

### SUMMARY

Embodiments of this application provide an eSIM identification method, so that a pluggable eSIM card used by an electronic device can be identified, and then the pluggable eSIM card is managed and controlled, to restrict the electronic device from continuing to use the pluggable eSIM card.

According to a first aspect, this application provides an eSIM identification method. The method includes: powering on a first subscriber identity module SIM card; and when the first SIM card is identified as a pluggable eSIM card, stopping using the pluggable eSIM card.

Through implementation of this embodiment of this application, the pluggable eSIM card used by an electronic device can be effectively identified, and then the pluggable eSIM card is managed and controlled, to restrict the electronic device from using the pluggable eSIM card. This satisfies a requirement that the pluggable eSIM card cannot be used in some regions.

In an implementation, the method further includes: when detecting that the first SIM card is a physical SIM card in a card slot and that interaction information of the first SIM card satisfies a preset condition, identifying the first SIM card as the pluggable eSIM card, where that the interaction information of the first SIM card satisfies the preset condition indicates that the first SIM card is an eSIM card. Through implementation of this embodiment of this application, when it is detected that the SIM card is the physical SIM card in the card slot, and the SIM card is identified as the eSIM card based on the interaction information of the SIM card, the pluggable eSIM card is effectively identified, and then the pluggable eSIM card is stopped from being used, to restrict the electronic device from using the pluggable eSIM card. This satisfies a requirement that the pluggable eSIM card cannot be used in some regions.

In an implementation, the preset condition includes a part or all of the following conditions: a first condition, including: a preset field of an answer to reset ATR of the first SIM card includes an eSIM identifier; a second condition, including: an application that invokes an open mobile application programming interface OMAPI for interaction with the first SIM card is an authorized application of the eSIM card; a third condition, including: a SIM application specific to the eSIM is selected from the first SIM card; and a fourth condition, including: an application protocol data unit APDU header for interaction with the first SIM card includes an eSIM-specific instruction. Through implementation of this embodiment of this application, the pluggable eSIM card can be effectively identified based on the part or all of the first condition to the fourth condition, to restrict the electronic device from continuing to use the pluggable eSIM card.

In an implementation, the electronic device includes a first communication module and an application processor, the first communication module includes a modem, the interaction information of the first SIM card includes the ATR, and detecting that the interaction information of the first SIM card satisfies the first condition includes: After the modem powers on the first SIM card, the first communication module obtains the ATR fed back by the first SIM card to the modem; the first communication module sends the ATR to the application processor; and the application processor detects that the preset field of the ATR includes the eSIM identifier. Through implementation of this embodiment of this application, the pluggable eSIM card can be effectively identified based on the eSIM identifier in the preset field of the ATR, to restrict the electronic device from continuing to use the pluggable eSIM card.

In an implementation, the electronic device includes the first communication module and the application processor, the first communication module includes the modem, the interaction information of the first SIM card includes the application that invokes the OMAPI for interaction with the first SIM card, and detecting that the interaction information of the first SIM card satisfies the second condition includes: After the modem powers on the first SIM card, when detecting that the OMAPI is invoked, the first communication module notifies the application processor that the OMAPI is invoked; and the application processor detects that the application that invokes the OMAPI is an authorized application of the eSIM card. Through implementation of this embodiment of this application, the pluggable eSIM card can be effectively identified based on the authorized application that invokes the OMAPI, to restrict the electronic device from continuing to use the pluggable eSIM card.

In an implementation, the authorized application of the eSIM card satisfies a part or all of the following features: The authorized application is an application in a preset trustlist, and has a system signature encrypted by using a preset encryption key.

In an implementation, the electronic device includes the first communication module and the application processor, the interaction information of the first SIM card includes an application identifier AID of a SIM application selected from the first SIM card, and detecting that interaction information of the first SIM card satisfies the third condition includes: The first communication module determines an AID of a first SIM application selected from the first SIM card; the first communication module sends the AID of the first SIM application to the application processor; and the application processor detects, based on the AID, that the first SIM application is the SIM application specific to the eSIM. Through implementation of this embodiment of this application, the pluggable eSIM card can be effectively identified based on the AID of the SIM application that is specific to the eSIM and that is selected from the SIM card, to restrict the electronic device from continuing to use the pluggable eSIM card.

In an implementation, the SIM application specific to the eSIM includes: an issuer security domain-profile ISD-P, an issuer security domain-root ISD-R, an eUICC controlling authority security domain ECASD, a local profile assistant LPA, and the like.

In an implementation, the electronic device includes the first communication module and the application processor, the first communication module includes the modem, the interaction information of the first SIM card includes the APDU header for interaction with the first SIM card, and detecting that the interaction information of the first SIM card satisfies the fourth condition includes: The first communication module obtains an APDU header for interaction between the first SIM card and the modem; the first communication module sends the APDU header to the application processor; and the application processor detects that the APDU header includes the eSIM-specific instruction. Through implementation of this embodiment of this application, the pluggable eSIM card can be effectively identified based on the eSIM-specific instruction in the APDU header for interaction with the SIM card, to restrict the electronic device from continuing to use the pluggable eSIM card.

In an implementation, the electronic device includes the first communication module and the application processor; and the method further includes: After the first SIM card is powered on, the first communication module determines a number of a general-purpose input/output GPIO pin that is of the communication module and to which the first SIM card is connected; and the first communication module sends the number of the GPIO pin to the application processor; and detecting that the first SIM card is the physical SIM card in the card slot includes: the application processor determines, based on the number of the GPIO pin, that the first SIM card is the physical SIM card in the card slot. Through implementation of this embodiment of this application, the pluggable eSIM card can be effectively identified based on the GPIO pin to which the SIM card is connected, to restrict the electronic device from continuing to use the pluggable eSIM card.

In an implementation, when the GPIO pin to which the first SIM card is connected corresponds to a SIM switch, the method further includes: The first communication module determines a switch state of the SIM switch; and the first communication module sends the switch state of the SIM switch to the application processor; and detecting that the first SIM card is the physical SIM card in the card slot includes: The application processor determines, based on the number of the GPIO pin and the switch state of the SIM switch, that the first SIM card is the physical SIM card in the card slot. Through implementation of this embodiment of this application, the pluggable eSIM card can be effectively identified based on the GPIO pin to which the SIM card is connected and the switch state of the SIM switch corresponding to the GPIO pin, to restrict the electronic device from continuing to use the pluggable eSIM card.

In an implementation, stopping using the pluggable eSIM card includes: disabling a logical channel between the pluggable eSIM card and the modem; and/or powering off the pluggable eSIM card. Through implementation of this embodiment of this application, after the pluggable eSIM card is identified, the electronic device can be restricted from continuing to use the pluggable eSIM card by disabling the logical channel with the pluggable eSIM card and powering off the pluggable eSIM card. This satisfies a requirement that the pluggable eSIM card cannot be used in some regions.

According to a second aspect, an embodiment of this application provides an electronic device. The electronic device includes a processor and a memory. The memory is coupled to the processor. The memory is configured to store computer program code. The computer program code includes computer instructions. When the processor reads the computer instructions from the memory, the electronic device is enabled to perform the eSIM identification method according to the first aspect.

According to a third aspect, an embodiment of this application provides a computer storage medium, including computer instructions. When the computer instructions are run on an electronic device, the electronic device is enabled to perform the eSIM identification method according to any possible implementation of any one of the foregoing aspects.

According to a fourth aspect, an embodiment of this application provides a computer program product. When the computer program product runs on a computer, the computer is enabled to perform the eSIM identification method according to any possible implementation of any one of the foregoing aspects.

### BRIEF DESCRIPTION OF DRAWINGS

FIG. 1 is a diagram of a structure of an electronic device according to an embodiment of this application;
FIG. 2 is a diagram of an architecture of an eSIM according to an embodiment of this application;
FIG. 3A is a diagram of a software architecture of an electronic device according to an embodiment of this application;
FIG. 3B to FIG. 3E are diagrams of connections of SIM cards according to an embodiment of this application;
FIG. 4A and FIG. 4B are diagrams of eSIM interfaces according to an embodiment of this application;
FIG. 5 is a schematic flowchart of an eSIM identification method according to an embodiment of this application;
FIG. 6A and FIG. 6B-1 and FIG. 6B-2 are a schematic flowchart of another eSIM identification method according to an embodiment of this application;
FIG. 7A and FIG. 7B are a schematic flowchart of another eSIM identification method according to an embodiment of this application;
FIG. 8A and FIG. 8B are a schematic flowchart of another eSIM identification method according to an embodiment of this application;
FIG. 9A and FIG. 9B are a schematic flowchart of another eSIM identification method according to an embodiment of this application; and
FIG. 10 is a schematic flowchart of another eSIM identification method according to an embodiment of this application.

### DESCRIPTION OF EMBODIMENTS

The technical solutions according to embodiments of this application are clearly and completely described below with reference to the accompanying drawings. In descriptions of embodiments of this application, unless otherwise stated, "/" represents "or". For example, A/B may represent A or B. In this specification, "and/or" merely describes an association relationship between associated objects and represents that three relationships may exist. For example, A and/or B may represent the following three cases: Only A exists, both A and B exist, and only B exists. In addition, in the descriptions of embodiments of this application, "a plurality of" means two or more than two.

The terms "first" and "second" mentioned below are merely intended for a purpose of description, and shall not be understood as an indication or implication of relative importance or implicit indication of a quantity of indicated technical features. Therefore, a feature limited by "first" and "second" may explicitly or implicitly include one or more features. In the descriptions of embodiments of this application, unless otherwise stated, "a plurality of" means two or more.

For ease of understanding, the following describes technical concepts in embodiments of this application.

A SIM is a subscriber identity module that is provisioned by a mobile operator for a subscriber and that can be used to implement mobile communication, and is a universal integrated circuit card (UICC). A SIM card is used to store subscriber-related data, including system original data stored by a SIM card manufacturer, network parameters and subscriber data, such as authentication and encryption information, input by the mobile operator during card issuing, and data stored by the subscriber during use, such as SMS messages and contacts. An electronic device interacts with a mobile network through the SIM card, to implement functions such as conversation and data communication.

A SIM card slot may include a card holder and a card tray. The card tray may include a location for fastening at least one card, the card holder includes at least one SIM connector, and the SIM connector is configured to connect to a physical SIM card. In embodiments of this application, the SIM card slot may also be referred to as a card slot, a physical card slot, or the like.

A conventional SIM card is a pluggable physical SIM card. A subscriber needs to select a number and access a network in advance at an offline/online business hall of a mobile operator, and can use the SIM card only after the SIM card is inserted into a SIM card slot of an electronic device after being activated.

An eSIM card is a SIM card that can be remotely configured and remotely issued by writing data through OTA, to implement a similar function of a conventional SIM card. Specifically, the eSIM card may implement operations such as downloading, installing, activating, deactivating, and deleting an operator profile based on the OTA. The eSIM card may write or erase configuration information (for example, a subscriber identity and operator subscription information) of any operator, so that the subscriber can more flexibly select an operator package, and online enable and replace, through a network management platform, different services provided by different operators. A plurality of eSIM profiles of an operator may be stored in the eSIM card. A profile of an eSIM may independently form a SIM application, and each SIM application is equivalent to a function of a SIM card. The eSIM card may also be referred to as an eSIM module. The eSIM card may also be referred to as an embedded universal integrated circuit card (universal integrated circuit card, UICC), namely, an eUICC. In terms of physical forms, the eSIM card may be classified into a surface mount eSIM card and a pluggable eSIM card.

The surface mount eSIM card means that the UICC is integrated into an electronic device, instead of being added to the electronic device as an independent removable component. A surface mount eSIM is inseparable from the electronic device. For example, the eSIM may be integrated into a system on chip (system on chip, SOC) chip, a modem (modem) chip, or a near field communication (near field communication, NFC) chip. This is not limited in embodiments of this application.

The pluggable eSIM card is an eSIM physical card that is separable from the electronic device. A method for mounting the pluggable eSIM card is the same as that for mounting the conventional SIM card, that is, the pluggable eSIM card is inserted into a SIM card slot. In this way, an existing electronic device without the surface mount eSIM card can also implement a function of the eSIM by mounting a pluggable eSIM.

An internal SIM is a general term for a type of programmable SIM that does not require a card slot, can be remotely configured and remotely issued, and is inseparable from the electronic device, such as a surface mount eSIM card, a virtual SIM (virtual SIM, vSIM), and an integrated SIM (integrated SIM, iSIM). In subsequent embodiments, the surface mount eSIM card is mainly used as an example for description.

In some embodiments, a SIM card slot is disposed in an electronic device 100, and the card slot may be configured to mount a pluggable eSIM card and/or a conventional SIM card. When the electronic device 100 uses a SIM card (for example, the conventional SIM card, the surface mount eSIM card, or the pluggable eSIM card), how the electronic device 100 identifies whether the currently used SIM card is an eSIM card still needs to be studied.

In a use scenario, there is a requirement that the eSIM card cannot be used in some regions. In the eSIM identification method provided in embodiments of this application, for the foregoing requirement, the eSIM card used by the electronic device 100 can be effectively identified, and then the eSIM card is managed and controlled, to prevent the electronic device 100 from continuing to use the eSIM card.

In another use scenario, in some regions, there is a requirement that the pluggable eSIM card cannot be used, but the surface mount eSIM card is not limited. In the eSIM identification method provided in embodiments of this application, for the foregoing requirements, the pluggable eSIM card used by the electronic device 100 can be effectively identified, and then the pluggable eSIM card is managed and controlled, to prevent the electronic device 100 from continuing to use the pluggable eSIM card.

The following describes in detail the eSIM identification method provided in embodiments of this application.

In embodiments of this application, the electronic device 100 may be an electronic device that has a SIM card slot, for example, a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, and/or a smart city device. A specific type of the electronic device is not limited in embodiments of this application.

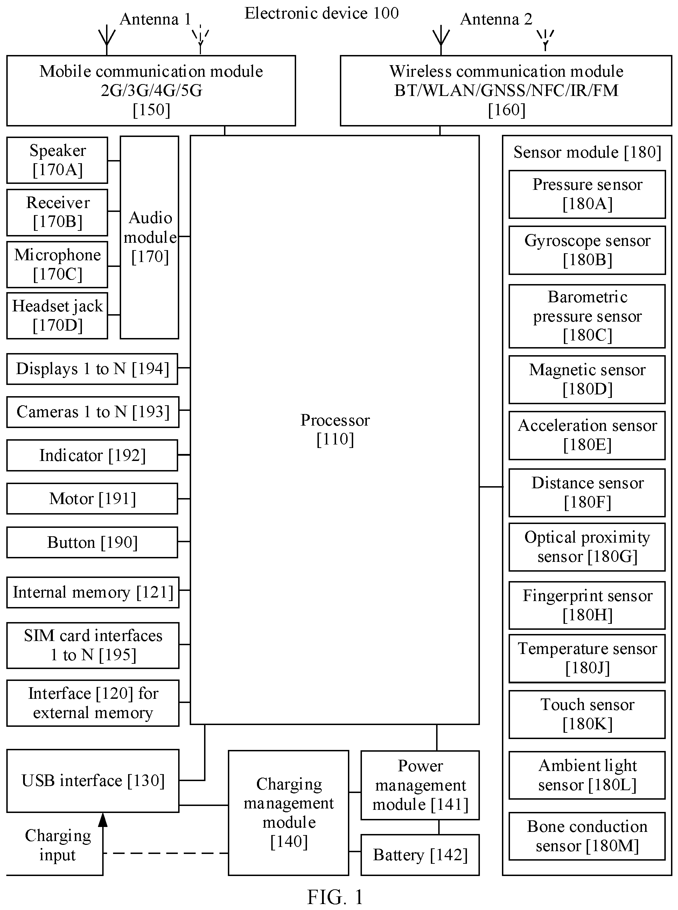

The following describes a structure of the electronic device 100 provided in embodiments of this application. FIG. 1 is a diagram of the structure of the electronic device 100.

The electronic device 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem (Modem) processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on instruction operation code and a time sequence signal, to complete control of instruction reading and instruction execution.

A memory may be further disposed in the processor 110, and is configured to store instructions and data. In some embodiments, the memory in the processor 110 is a cache. The memory may store instructions or data that is just used or cyclically used by the processor 110. If the processor 110 needs to use the instructions or the data again, the processor 110 may directly invoke the instructions or the data from the memory. This avoids repeated access, and reduces waiting time of the processor 110, to improve system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus, and includes a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be configured to perform audio communication, and sample, quantize, and code an analog signal. In some embodiments, the audio module 170 may be coupled to the wireless communication module 160 through a PCM bus interface. In some embodiments, the audio module 170 may alternatively transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is configured to perform asynchronous communication. The bus may be a bidirectional communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component like the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a shooting function of the electronic device 100. The processor 110 communicates with the display 194 through the DSI interface, to implement a display function of the electronic device 100.

The GPIO interface may be configured by using software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to perform data transmission between the electronic device 100 and a peripheral device, or may be configured to connect to a headset to play an audio through the headset. The interface may be further configured to connect to another electronic device, for example, an AR device.

It may be understood that an interface connection relationship between the modules that is shown in this embodiment of the present invention is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from a charger. The charger may be a wireless charger or a wired charger. In some embodiments of wired charging, the charging management module 140 may receive a charging input of the wired charger through the USB interface 130. In some embodiments of wireless charging, the charging management module 140 may receive a wireless charging input through a wireless charging coil of the electronic device 100. When charging the battery 142, the charging management module 140 may further supply power to the electronic device through the power management module 141.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same component.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communication frequency bands. Different antennas may be further reused to improve antenna utilization. For example, the antenna 1 may be reused as a diversity antenna of a wireless local area network. In some other embodiments, the antenna may be used in combination with a tuning switch.

The mobile communication module 150 may provide a solution, applied to the electronic device 100, to wireless communication including 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation. The mobile communication module 150 may further amplify a signal modulated by the modem processor, and convert an amplified signal into an electromagnetic wave for radiation through the antenna 1. In some embodiments, at least some functional modules in the mobile communication module 150 may be disposed in the processor 110. In some embodiments, at least some functional modules in the mobile communication module 150 may be disposed in a same component as at least some modules in the processor 110.

The modem processor may include a modulator and a demodulator. The modulator is configured to modulate a to-be-sent low-frequency baseband signal into a medium/high-frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (which is not limited to the speaker 170A, the receiver 170B, or the like), or displays an image or a video through the display 194. In some embodiments, the modem processor may be an independent component. In some other embodiments, the modem processor may be independent of the processor 110, and is disposed in the same component as the mobile communication module 150 or another functional module.

The wireless communication module 160 may provide a solution, applied to the electronic device 100, to wireless communication including a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processing module. The wireless communication module 160 receives an electromagnetic wave through the antenna 2, performs demodulation and filtering processing on an electromagnetic wave signal, and sends a processed signal to the processor 110. The wireless communication module 160 may further receive a to-be-sent signal from the processor 110, perform frequency modulation and amplification on the signal, and convert a processed signal into an electromagnetic wave for radiation through the antenna 2.

In some embodiments, in the electronic device 100, the antenna 1 and the mobile communication module 150 are coupled, and the antenna 2 and the wireless communication module 160 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information.

The display 194 is configured to display information such as an image and a video. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 194, where N is a positive integer greater than 1.

The electronic device 100 may implement a shooting function through the ISP, the camera 193, the video codec, the GPU, the display 194, the application processor, and the like.

The ISP is configured to process data fed back by the camera 193. For example, during photographing, a shutter is pressed, and light is transferred to a photosensitive element of the camera through a lens. An optical signal is converted into an electrical signal, and the photosensitive element of the camera transfers the electrical signal to the ISP for processing, to convert the electrical signal into a visible image. The ISP may further perform algorithm optimization on noise and brightness of the image. The ISP may further optimize parameters such as exposure and a color temperature of a shooting scene. In some embodiments, the ISP may be disposed in the camera 193.

The camera 193 is configured to capture a static image or a video. An optical image of an object is generated through the lens, and is projected onto the photosensitive element. The photosensitive element may be a charge-coupled device (charge-coupled device, CCD) or a complementary metal-oxide-semiconductor (complementary metal-oxide-semiconductor, CMOS) phototransistor. The photosensitive element converts an optical signal into an electrical signal, and then transfers the electrical signal to the ISP to convert the electrical signal into a digital image signal. The ISP outputs the digital image signal to the DSP for processing. The DSP converts the digital image signal into an image signal in a standard format like RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transform on frequency energy.

The video codec is configured to compress or decompress a digital video. The electronic device 100 may support one or more types of video codecs. In this way, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information by referring to a structure of a biological neural network, for example, by referring to a mode of transfer between human brain neurons, and may further continuously perform self-learning. Applications such as intelligent cognition of the electronic device 100 may be implemented through the NPU, for example, image recognition, facial recognition, voice recognition, and text understanding.

The internal memory 121 may include one or more random access memories (random access memories, RAMs) and one or more non-volatile memories (non-volatile memories, NVMs).

The random access memory may include a static random access memory (static random access memory, SRAM), a dynamic random access memory (dynamic random access memory, DRAM), a synchronous dynamic random access memory (synchronous dynamic random access memory, SDRAM), a double data rate synchronous dynamic random access memory (double data rate synchronous dynamic random access memory, DDR SDRAM, for example, a fifth-generation DDR SDRAM is usually referred to as a DDR5 SDRAM), or the like. The non-volatile memory may include a magnetic disk storage device and a flash memory (flash memory).

The flash memory may be classified into an NOR flash, an NAND flash, a 3D NAND flash, and the like according to an operation principle; may be classified into a single-level cell (single-level cell, SLC), a multi-level cell (multi-level cell, MLC), a triple-level cell (triple-level cell, TLC), a quad-level cell (quad-level cell, QLC), and the like based on a quantity of electric potential levels of a cell; or may be classified into a universal flash storage (English: universal flash storage, UFS), an embedded multimedia memory card (embedded multimedia Card, eMMC), and the like according to storage specifications.

The random access memory may be directly read and written by the processor 110, may be configured to store executable programs (for example, machine instructions) in an operating system or another running program, and may be configured to store data of a user, data of an application, and the like.

The non-volatile memory may also store the executable programs, the data of the user, the data of the application, and the like, which may be loaded into the random access memory in advance to be directly read and written by the processor 110.

The interface 120 for external memory may be configured to connect to an external non-volatile memory, to extend a storage capability of the electronic device 100. The external non-volatile memory communicates with the processor 110 through the interface 120 for external memory, to implement a data storage function. For example, files such as music and videos are stored in the external non-volatile memory.

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for an output, and is also configured to convert an analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal.

The receiver 170B, also referred to as an "earpiece", is configured to convert an audio electrical signal into a sound signal.

The microphone 170C, also referred to as a "mike" or a "mic", is configured to convert a sound signal into an electrical signal.

The headset jack 170D is configured to connect to a wired headset.

The pressure sensor 180A is configured to sense a pressure signal, and may convert the pressure signal into an electrical signal.

The gyroscope sensor 180B may be configured to determine a moving posture of the electronic device 100.

The barometric pressure sensor 180C is configured to measure barometric pressure.

The magnetic sensor 180D includes a Hall sensor. The electronic device 100 may detect opening and closing of a flip cover through the magnetic sensor 180D.

The acceleration sensor 180E may detect accelerations in various directions (usually on three axes) of the electronic device 100.

The distance sensor 180F is configured to measure a distance. The electronic device 100 may measure the distance in an infrared manner or a laser manner.

The optical proximity sensor 180G may include, for example, a light-emitting diode (LED), and an optical detector, for example, a photodiode.

The ambient light sensor 180L is configured to sense ambient light brightness.

The fingerprint sensor 180H is configured to collect a fingerprint. The electronic device 100 may use a feature of the collected fingerprint to implement fingerprint-based unlocking, and the like.

The temperature sensor 180J is configured to detect a temperature.

The touch sensor 180K is also referred to as a "touch component". The touch sensor 180K may be disposed on the display 194, and the touch sensor 180K and the display 194 form a touchscreen, which is also referred to as a "touch screen". The touch sensor 180K is configured to detect a touch operation performed on or near the touch sensor 180K. The touch sensor may transfer the detected touch operation to the application processor, to determine a type of a touch event.

The bone conduction sensor 180M may obtain a vibration signal.

The button 190 includes a power button, a volume button, and the like. The button 190 may be a mechanical button, or may be a touch button.

The motor 191 may generate a vibration prompt. The motor 191 may be configured to provide an incoming call vibration prompt and a touch vibration feedback.

The indicator 192 may be an indicator light, and may be configured to indicate a charging status, a power change, a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a plurality of SIM module sizes, in other words, is compatible with SIM modules of different size types, such as a nano-SIM card, a micro-SIM card, and a regular-sized SIM card. The SIM card interface 195 is also compatible with SIM cards of different types. A plurality of cards may be simultaneously inserted into a same SIM card interface 195, and types of the plurality of cards may be the same or different. The SIM card interface 195 is also compatible with an external memory card. The electronic device 100 interacts with a network through the SIM card, to implement functions such as conversation and data communication. It may be understood that the SIM card interface 195 is a hardware interface between the electronic device 100 and the SIM card, and may be configured to connect to a pluggable physical SIM card in a SIM card slot.

In some embodiments, the electronic device 100 includes a surface mount eSIM card, and the surface mount eSIM card is integrated inside the electronic device 100 and is inseparable from the electronic device 100. The electronic device 100 may alternatively interact with a network through the surface mount eSIM card, to implement functions such as conversation and data communication.

In embodiments of this application, the electronic device 100 may be a single-card single-pass device, a dual-card single-pass device, a dual-card dual-pass device, a multi-card multi-pass device, a multi-card multi-pass device, or the like. This is not specifically limited in embodiments of this application.

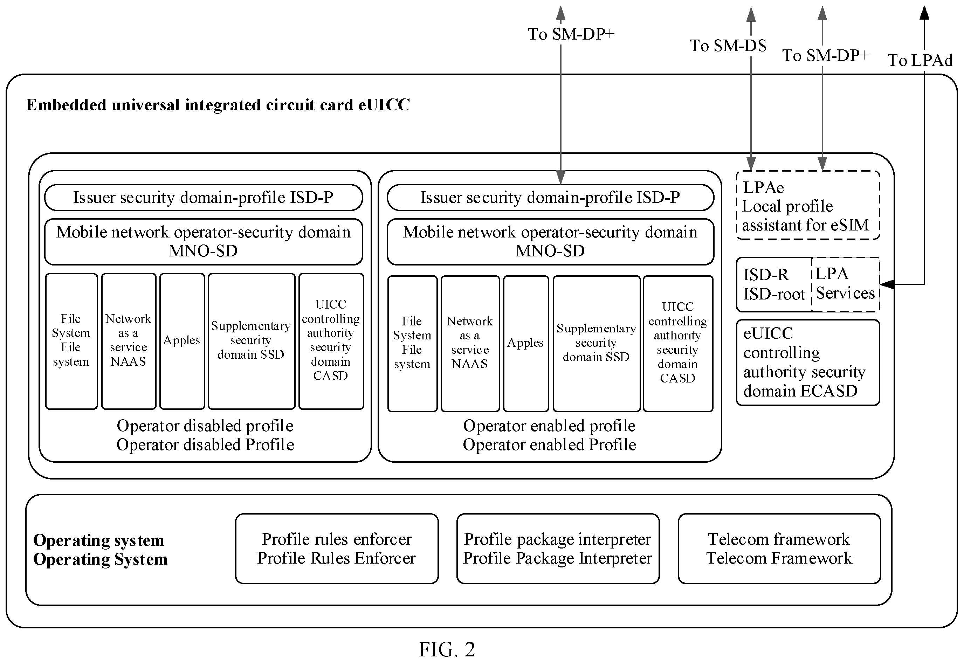

For example, FIG. 2 is a diagram of an architecture of an eSIM card.

As shown in FIG. 2, the eSIM card may include an eUICC operating system (Operating System) and a plurality of profiles (Profiles).

The eUICC operating system includes: a profile rules enforcer (Profile Rules Enforcer), a profile package interpreter (Profile Package Interpreter), and a telecom framework (Telecom Framework).

The plurality of profiles (Profiles) of an eSIM may include: an operator enabled profile (Operator enabled Profile), an operator disabled profile (Operator disabled Profile), a local profile assistant for eSIM (Local Profile Assistant for eSIM, LPAe), an issuer security domain-root (Issuer Security Domain-Root, ISD-R), and an eUICC controlling authority security domain (Embedded UICC Controlling Authority Security Domain, ECASD). The operator enabled profile may include: an issuer security domain-profile (Issuer Security Domain-Profile, ISD-P), a mobile network operator-security domain (Mobile network operator-Security Domain, MNO-SD), a file system (File System), a network access application service (Network Access Application service, NAAS), Apples, a supplementary security domain (Secondary Secure Domain, SSD), and a UICC controlling authority security domain (UICC Controlling Authority Security Domain, CASD). Similarly, for files in the operator disabled profile, refer to files in an operator available profile. Details are not described herein again.

The ISD-P is a secure container for hosting a profile. The ISD-P cooperates with the profile package interpreter to download and install the profile, to decode/interpret a received profile package. A subscription manager-data preparation plus (subscription manager-data preparation plus, SM-DP+) server is responsible for requesting creation of the ISD-P in the eSIM, and managing life cycle management of the ISD-P that is requested for creation.

The ISD-R includes LPA services (LPA Services). The ISD-R is responsible for creating a new ISD-P and managing life cycles of all ISD-Ps. The LPA services are used to provide services and data that are required for an LPA function. The LPA services in the eSIM may interact with an LPAd in the electronic device. The LPAd is configured to: obtain an address and a password of the SM-DP+ server, and establish a communication connection to the SM-DP+ based on the address and the password of the SM-DP+ server.

An LPA is a core module for managing a profile by using an eUICC. When running in the eSIM, the LPA may be referred to as the LPAe, and is a medium for interaction between the eSIM card and the SM-DP+. Optionally, the LPAe may obtain address information of the SM-DP+ from a subscription manager discovery server (Subscription Manager Discovery Server, SM-DS), and the LPAe may download the profile to the eSIM from the SM-DP+.

The ECASD is a credential required for supporting a security domain required on the eUICC. One eSIM usually has only one ECASD and one ISD-R.

In this embodiment of this application, a software system of the electronic device 100 may use a layered architecture, an event-driven architecture, a micro kernel architecture, a micro service architecture, or a cloud architecture. In this embodiment of this application, an Android system of the layered architecture is used as an example to describe a software structure of the electronic device 100.

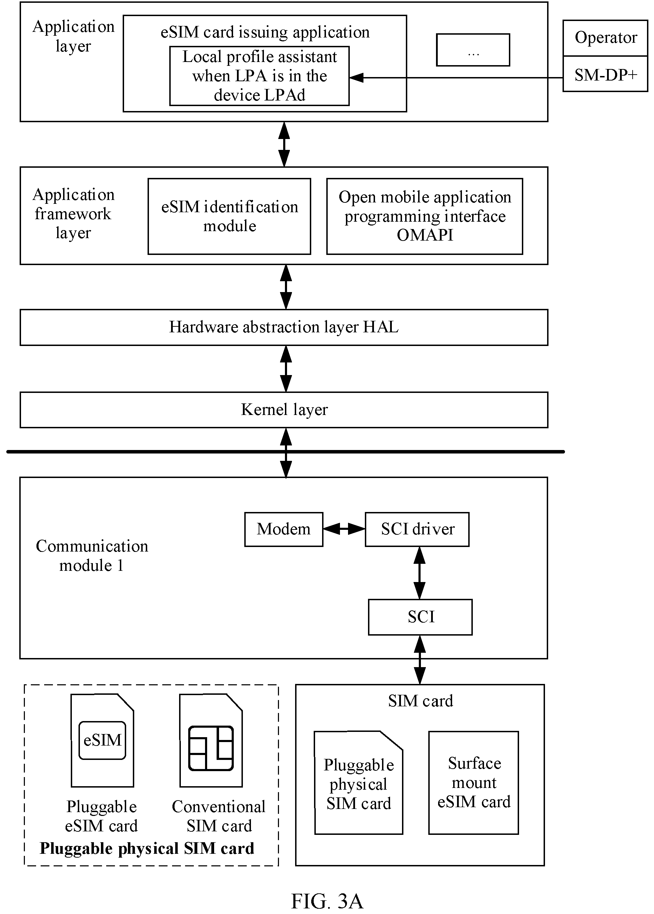

FIG. 3A is a block diagram of an example of a software structure of an electronic device according to this embodiment of this application. The electronic device 100 can effectively identify an eSIM card/a pluggable eSIM card in the electronic device 100, and then manage and control the eSIM card/the pluggable eSIM card.

As shown in FIG. 3A, in a layered architecture, software is divided into several layers, and each layer has a clear role and task. The layers communicate with each other through a software interface. In some embodiments, the Android system may be divided into an application layer, an application framework layer, a system library, a hardware abstraction layer (hardware abstraction layer, HAL) layer, and a kernel (kernel) layer from top to bottom.

The application layer includes a series of application packages, such as a phone application, a music application, and a projection application.

In some embodiments, the application layer may further include an eSIM card issuing application (Application, APP), and the eSIM card issuing application may include a local profile assistant when LPA is in the device (local Profile assistant when LPA is in the device, LPAd). The eSIM card issuing application is management software of the eSIM card, and may be used to maintain functions such as downloading, activation, deletion, and display of each profile in hardware, namely, the eSIM card. In addition, another application (for example, an online business hall APP of a mobile operator) may obtain related information such as a profile in the eSIM card through a corresponding interface provided by the eSIM card issuing application. When an LPA runs on an electronic device, the LPA may be referred to as the LPAd. The LPAd may be configured to: interact with an eSIM server (for example, an SM-DP+) provided by an operator, and perform a related operation, for example, downloading a profile from the SM-DP+.

The eSIM card issuing application may run in an operating system of the electronic device 100 as a system-level application, or may be integrated into the eSIM card. This is not limited in embodiments of this application.

The application framework layer provides an application programming interface (application programming interface, API) and a programming framework for an application at the application layer. The API is used to implement communication between the application layer and a protocol stack, the HAL layer, and the kernel layer. The application framework layer includes some predefined functions.

As shown in FIG. 3A, the application framework layer may mainly include a system server (System Server). The system server is some background service components in the Android operating system, and is configured to provide access to system resources and functions. Common system servers include an activity manager (Activity Manager), a window manager (Window Manager), a package manager (Package Manager), and the like.

In this embodiment of this application, the system server (System Server) may further include an eSIM identification module and an open mobile application programming interface (open mobile API, OMAPI). The eSIM identification module may be configured to identify whether the eSIM card is used, or may be configured to specifically identify whether the pluggable eSIM card is used. The OMAPI is an interface service used to access a device security element (for example, a conventional SIM card or the eSIM card). An application may access data in the SIM card through the OMAPI. In an implementation, the OMAPI may be connected to the eSIM card at the hardware layer through a SIM card interface driver that is based on an international organization for standardization (international organization for standardization, ISO) 7876 standard, for example, a serial peripheral interface (serial peripheral interface, SPI) driver at the kernel (kernel) layer or an ISO 7816 driver, so that the LPA can interact with the eSIM card, to perform a related operation (for example, an update operation) on system data in the eSIM card.

The application layer and the application framework layer run on a virtual machine. The virtual machine executes Java files at the application layer and the application framework layer as binary files. The virtual machine is configured to implement functions such as object lifecycle management, stack management, thread management, security and exception management, and garbage collection.

The system library is a support of the application framework layer and a bond connecting the application framework layer and the kernel layer. The system library may include a plurality of functional modules, for example, a Bluetooth protocol stack.

The HAL layer and the kernel lay are configured to perform a corresponding operation in response to a function invoked by the system server in the application framework layer.

The kernel layer is an abstraction layer between hardware and software, and provides core system services of the operating system. The layer has many drivers, configured to drive related hardware at the hardware layer, for example, a display driver, a camera driver, and a sensor driver.

In some embodiments, as shown in FIG. 3A, a communication module 1 (for example, a baseband processor) of the electronic device 100 includes a modem (Modem). An upper-layer software system of the electronic device 100 may interact with a SIM card through the modem, and then access a mobile network, to implement related functions such as voice and data transmission, call making, and SMS message transmission. In an implementation, the modem interacts with the SIM card through an application protocol data unit (Application Protocol Data Unit, APDU), where the APDU includes application layer control information and data. For example, when the modem interacts with the eSIM card through the APDU, an APDU header may include a specific command of the eSIM. In embodiments of this application, the communication module 1 may also be referred to as a first communication module.

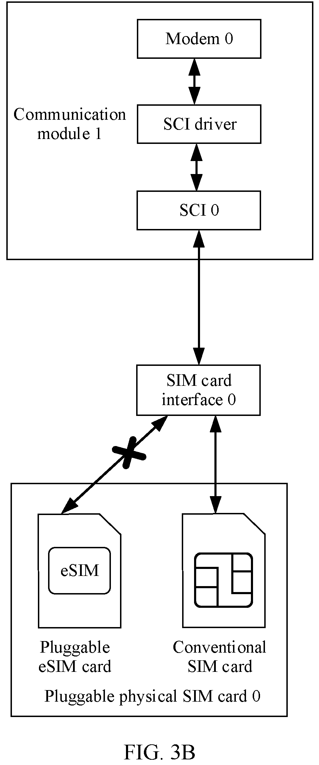

In some embodiments, as shown in FIG. 3A, the communication module 1 further includes a smart card interface (Serial Communication Interface, SCI), an SCI driver, and the modem. The SCI driver and the SCI may be configured to control connection relationships between different modems and different SIM modules (such as a physical SIM card and a surface mount SIM card). The SCI may be connected to a pluggable physical SIM card (for example, a conventional SIM card or the pluggable SIM card) through a SIM card interface, or may be connected to a surface mount SIM card. The communication module 1 may obtain the connection relationships between the modems and the SIM modules through the SCI driver, and report the connection relationships to the upper-layer software system. In an implementation, the eSIM identification module may determine, based on the connection relationships, whether a currently used SIM card is the physical SIM card in a SIM card slot. For example, FIG. 3B to FIG. 3E show examples of four connection relationships between modems and SIM modules.

Example 1: As shown in FIG. 3B, the electronic device 100 may include at least one modem (for example, a modem 0), at least one SCI (for example, an SCI 0), and at least one SIM card interface (for example, a SIM card interface 0). The electronic device 100 may not include an internal SIM (for example, a surface mount eSIM card). After a physical SIM card 0 is inserted into the SIM card interface 0, the modem 0 is connected to the physical SIM card 0 through the SCI 0. The pluggable physical SIM card 0 may be a conventional SIM card or a pluggable eSIM card. The electronic device 100 may be a single-card single-pass electronic device.

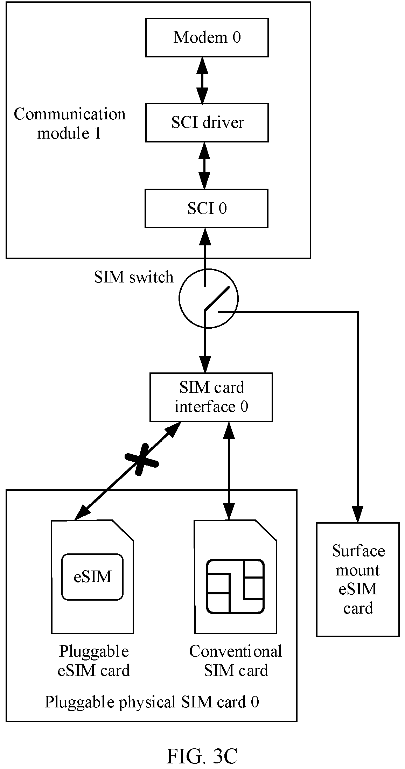

Example 2: As shown in FIG. 3C, the electronic device 100 may include a modem 0, an SCI 0, a SIM card interface 0, and an internal SIM (for example, a surface mount eSIM card). After a physical SIM card 0 is inserted into the SIM card interface 0, a SIM switch connected to the SCI 0 may be used to control the SCI 0 to connect to the surface mount eSIM card or the physical SIM card 0, and then may be used to control the modem 0 to connect to the surface mount eSIM card or the physical SIM card 0. It may be understood that the surface mount eSIM card or the physical SIM card 0 may share the modem 0 in a time-division sharing manner. The electronic device 100 may be a dual-card single-pass electronic device.

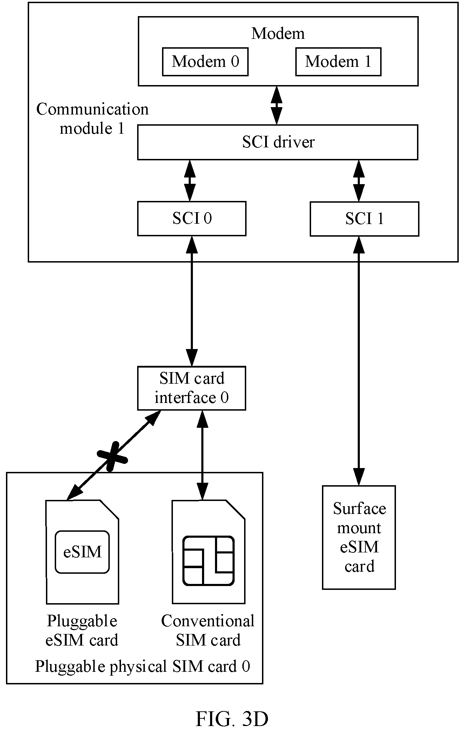

Example 3: As shown in FIG. 3D, the electronic device 100 may include a modem 0, a modem 1, an SCI 0, an SCI 1, a SIM card interface 1, and an internal SIM (for example, a surface mount eSIM card). After a physical SIM card 0 is inserted into the SIM card interface 0, the modem 0 may be connected to the physical SIM card 0 through the SCI 0; and the modem 1 may be connected to the surface mount eSIM card through the SCI 1. The surface mount eSIM card exclusively uses the modem 1. The electronic device 100 may be a dual-card dual-pass electronic device.

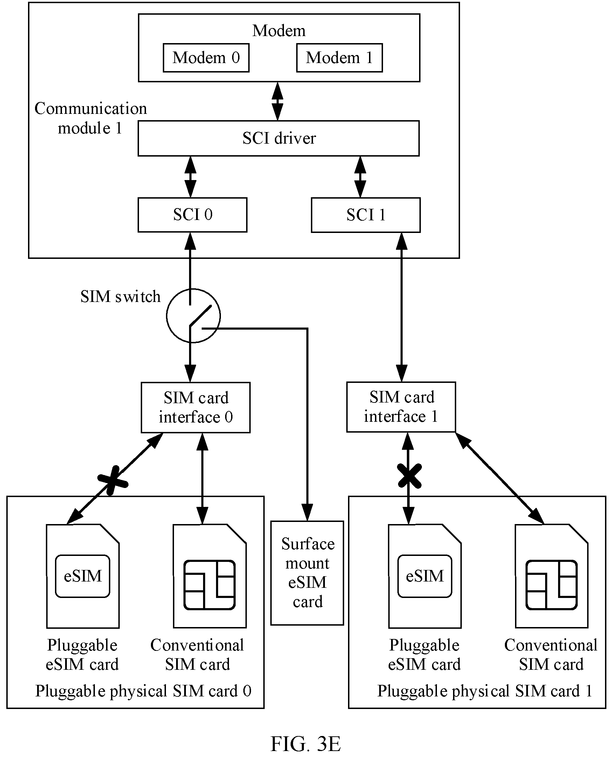

Example 4: As shown in FIG. 3E, the electronic device 100 may include a modem 0, a modem 1, an SCI 0, an SCI 1, a SIM card interface 0, a SIM card interface 1, and an internal SIM (for example, a surface mount eSIM card). After a physical SIM card 0 is inserted into the SIM card interface 0 and a physical SIM card 1 is inserted into the SIM card interface 1, and the modem 0 may be connected to the physical SIM card 1 through the SCI 0. A SIM switch connected to the SCI 1 may be used to control the SCI 1 to connect to the surface mount eSIM card or the physical SIM card 1, and then may be used to control the modem 1 to connect to the surface mount eSIM card or the physical SIM card 1. The electronic device 100 may be a three-card dual-pass electronic device.

Functions of the SCI 0 and the SCI 1 may be implemented by using hardware, or may be implemented by using software. If the functions are implemented by using hardware, the SCI 0 and the SCI 1 may be GPIO pins of the communication module 1 (for example, a baseband processor), that is, the SCI 0 and the SCI 1 are SCI hardware interfaces. An SCI driver may be implemented by using software. In an implementation, the SCI driver may alternatively be a modem driver program or instruction that is run on the communication module 1.

For example, the SCI 0 and the SCI 1 are GPIO pins of the communication module 1 (for example, a baseband processor). The SCI 0 and the SCI 1 are connected to different modems, that is, a GPIO pin corresponding to the SCI 0 and a GPIO pin corresponding to the SCI 1 are connected to different modems. In some embodiments, the SCI driver may determine, based on a GPIO pin that is of the communication module 1 and to which a SIM card is connected, whether the SIM card is a physical SIM card in a SIM card slot.

For example, as shown in FIG. 3B and FIG. 3D, the pluggable physical SIM card and the surface mount SIM card are connected to different GPIO pins of the communication module 1. In a subsequent embodiment, the SCI driver may determine, based on a GPIO pin that is of the communication module 1 and to which a SIM card is connected, whether the SIM card is a physical SIM card in a SIM card slot.

For example, as shown in FIG. 3C and FIG. 3E, physical SIM cards connected to different SIM card interfaces are connected to different GPIO pins of the communication module 1, and the physical SIM card 0 and the surface mount eSIM card are connected to a same GPIO pin of the communication module 1, but correspond to different switch states of the SIM switch. For example, if a switch states is 0, it indicates that a GPIO pin corresponding to the SCI 1 is connected to the physical SIM card 0; or if a switch state is 1, it indicates that a GPIO pin corresponding to the SCI 1 is connected to the surface mount eSIM card. In a subsequent embodiment, the SCI driver may determine, based on a GPIO pin that is of the communication module 1 and to which a SIM card is connected and a switch state of a switch corresponding to the GPIO pin, whether the SIM card is a physical SIM card in a SIM card slot.

It should be noted that FIG. 3B to FIG. 3E are merely examples provided in embodiments of this application, and a quantity of modems, a quantity of SIM modules, and a connection relationship between a modem and a SIM module are not specifically limited in embodiments of this application.

For example, as shown in FIG. 3A to FIG. 3E, the conventional SIM card and the pluggable eSIM card may be inserted into the SIM card slot of the electronic device 100, or the surface mount eSIM card may be embedded into the electronic device 100. In this embodiment of this application, after a modem of the electronic device 100 powers on a SIM card, the electronic device 100 may identify whether the SIM card is an eSIM card, and then manage and control the eSIM card; or the electronic device 100 may identify whether the SIM card is specifically a pluggable eSIM card, and then manage and control the pluggable eSIM card.

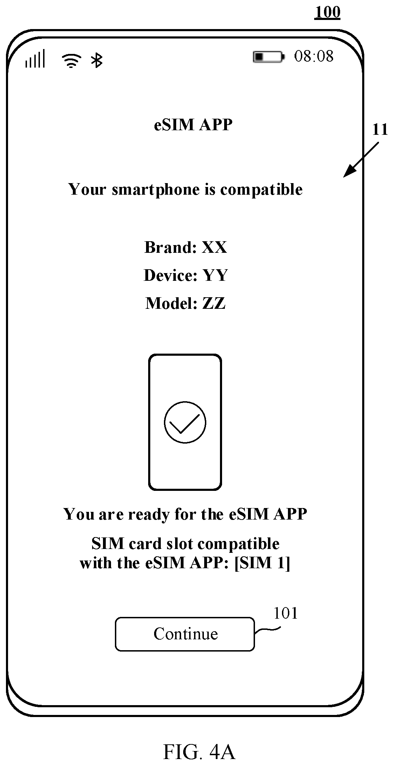

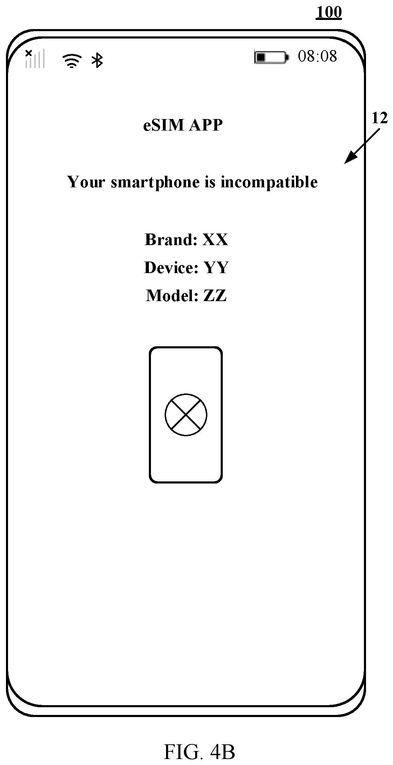

For example, a user inserts the pluggable eSIM card into a SIM card slot 1 (namely, a SIM 1) of the electronic device 100, and installs an eSIM application on the electronic device 100. The eSIM application is an application that performs a network service based on the eSIM card. Optionally, the eSIM application is specifically a third-party application. For example, FIG. 4A and FIG. 4B are interface comparison diagrams of allowing use of a pluggable eSIM card and restricting use of a pluggable eSIM card.

FIG. 4A shows an interface in which a user successfully uses an eSIM application when use of a pluggable eSIM card is allowed. In an implementation, after a user operation of starting the eSIM application by the user is detected, the eSIM application successfully performs a network service based on the eSIM card, and the eSIM application displays an interface 11 shown in FIG. 4A. The interface 11 indicates that an electronic device 100 is compatible with the eSIM application, and a SIM card slot compatible with the eSIM application is a SIM 1 into which the pluggable eSIM card is inserted. The interface 11 may include a Continue button 101, and the Continue button 101 is used to trigger display of another application interface of the eSIM application.

According to the eSIM identification method provided in this application, FIG. 4B shows an interface in which a user fails to use an eSIM application when use of a pluggable eSIM card is restricted. In an implementation, according to the eSIM identification method provided in this application, after the pluggable eSIM card inserted into a SIM 1 is powered on, an electronic device 100 controls the pluggable eSIM card to be powered off. After detecting a user operation of starting the eSIM application by the user, the eSIM application fails to invoke the eSIM card to perform a network service, and the eSIM application displays an interface 12 shown in FIG. 4B. The interface 12 indicates that the electronic device 100 is incompatible with the eSIM application.

Based on the foregoing technical concepts, the electronic device, the software system, and the SIM card, the following describes in detail a method procedure of an eSIM card identification method provided in embodiments of this application.

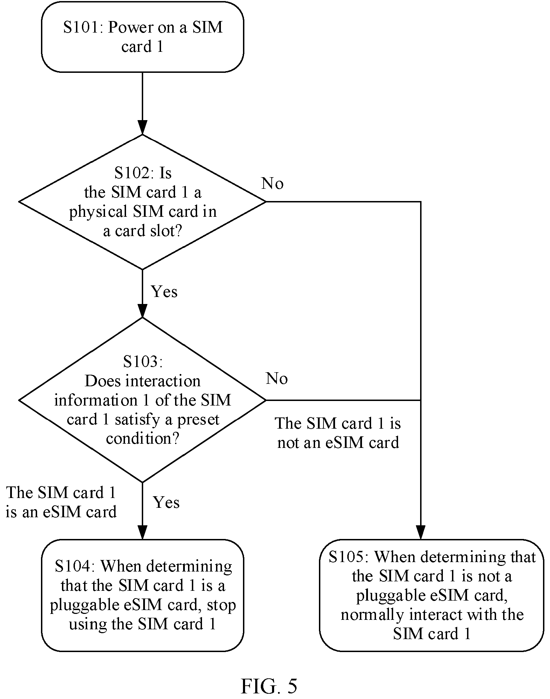

In Solution 1 provided in embodiments of this application, an electronic device 100 may effectively identify whether a powered-on SIM card is a pluggable eSIM card, to restrict use of the pluggable eSIM card. For example, FIG. 5 shows a method procedure of an eSIM card identification method. The method includes step S101 to step S105.

S101: An electronic device 100 powers on a SIM card 1.

In this embodiment of this application, the SIM card 1 may also be referred to as a first SIM card.

The following describes four cases in which the electronic device 100 powers on the SIM card 1. In Case 1, when the electronic device 100 is powered on or restarted, the electronic device 100 powers on the SIM card 1 in the electronic device 100. The SIM card 1 may be a physical SIM card that has been inserted into a card slot or a surface mount eSIM card. In Case 2, when the electronic device 100 in a power-on state detects that the SIM card 1 is inserted into a card slot, the electronic device 100 powers on the SIM card 1. The SIM card 1 is a physical SIM card. In Case 3, there are a plurality of SIM cards in the electronic device 100, and when a user switches, to the SIM card 1 in a process of using the electronic device 100, a SIM card used for current mobile communication, the electronic device 100 powers on the SIM card 1. The SIM card 1 may be a conventional SIM card or an eSIM card.

S102: The electronic device 100 determines whether the SIM card 1 is the physical SIM card in the card slot; and if the SIM card 1 is the physical SIM card in the card slot, performs S103; or if the SIM card 1 is not the physical SIM card in the card slot, performs S105.

In some embodiments, the electronic device 100 may obtain a number of a GPIO pin (namely, an SCI hardware interface, for example, an SCI 0 or an SCI 1) that is of a communication module 1 and to which the SIM card 1 is connected. The electronic device 100 may identify, based on the number, whether the SIM card is the physical SIM card in the SIM card slot. For example, as shown in FIG. 3D, the number of the GPIO pin may indicate the SCI 0 or the SCI 1. When the number of the GPIO pin indicates the SCI 0, the electronic device 100 determines that the SIM card 1 is the pluggable physical SIM card connected to a SIM card interface 0. When the number of the GPIO pin indicates the SCI 1, the electronic device 100 determines that the SIM card 1 is the surface mount eSIM card.

In some embodiments, when the SIM card 1 is connected to the GPIO pin of the communication module 1 through a SIM card switch, the electronic device 100 may obtain the number of the GPIO pin that is of the communication module 1 and to which the SIM card 1 is connected and a switch state of the SIM card switch. The electronic device 100 may identify, based on the number and the switch state, whether the SIM card 1 is the physical SIM card in the SIM card slot. For example, as shown in FIG. 3E, the number of the GPIO pin may indicate the SCI 0 or the SCI 1, and a switch state of a SIM switch corresponding to the SCI 0 is 0 or 1. When the number of the GPIO pin indicates the SCI 1, or the number of the GPIO pin indicates the SCI 0 and the switch state is 0, the electronic device 100 determines that the SIM card 1 is the pluggable physical SIM card. When the number of the GPIO pin indicates the SCI 0 and the switch state is 1, the electronic device 100 determines that the SIM card 1 is the surface mount eSIM card.

In addition to determining, by using the GPIO pin, whether the SIM card 1 is the physical SIM card in the card slot, in embodiments of this application, whether the SIM card 1 is the physical SIM card in the card slot may be determined in another manner. For example, the physical SIM card in the card slot is detected based on a pin like a hot-swappable DET pin, a VDD pin, or an interrupt PIN that is in the card slot. This is not specifically limited herein.

S103: The electronic device 100 determines whether interaction information 1 of the SIM card 1 satisfies a preset condition; and if the interaction information 1 of the SIM card 1 satisfies the preset condition, performs S104; or if the interaction information 1 of the SIM card 1 does not satisfy the preset condition, performs S105.

If the interaction information 1 of the SIM card 1 satisfies the preset condition, it indicates that the SIM card 1 is an eSIM card; or if the interaction information 1 of the SIM card 1 does not satisfy the preset condition, it indicates that the SIM card 1 is not an eSIM card.

In some embodiments of this application, after the SIM card 1 is powered on, the electronic device 100 may obtain interaction information related to the SIM card 1; and when detecting that the interaction information includes the interaction information 1, the electronic device 100 may identify, based on the interaction information 1, whether the SIM card is the eSIM card. The interaction information 1 may include a part or all of the following: a preset field of an answer to reset (answer to reset, ATR) fed back by the SIM card 1, an application identifier (for example, a package name or a system signature) of an application that invokes an OMAPI for interaction with the SIM card 1, an application identifier of a SIM application selected from the SIM card 1, and an instruction in an APDU header for interaction with the SIM card 1. In some embodiments, when the interaction information 1 satisfies the preset condition, the electronic device 100 identifies the SIM card as the eSIM card. The preset condition may include a part or all of a first condition to a fourth condition.

First condition: The preset field of the ATR fed back by the SIM card 1 includes an eUICC identifier (Flag). The eUICC identifier may also be referred to as an eSIM identifier.

Second condition: The application that invokes the OMAPI for interaction with the SIM card 1 is an authorized application of the eSIM card.

Third condition: A SIM application specific to the eSIM is selected from the SIM card 1.

Fourth condition: The APDU header for interaction with the SIM card 1 includes an eSIM-specific instruction.

Step S102 is optional. In some embodiments, the electronic device 100 determines, by default, that the electronic device 100 is not embedded with an internal SIM card (for example, the surface mount eSIM card), and does not need to perform S102.

S104: When determining that the SIM card 1 is a pluggable eSIM card, the electronic device 100 stops using the SIM card 1.

In some embodiments, that the electronic device 100 stops using the SIM card 1 specifically includes a part or all of the following: The electronic device 100 deactivates the SIM card 1, disables a logical channel between the SIM card 1 and a modem, and powers off the SIM card 1.

It may be understood that, if the SIM card 1 is identified as the physical SIM card in the SIM card slot in step S102, and the SIM card 1 is identified as the eSIM card in step S103, it may be determined that the SIM card 1 is the pluggable eSIM card; or if the SIM card 1 is not identified as the physical SIM card in the SIM card slot in step S102, and/or the SIM card 1 is not identified as the eSIM card in step S103, it is determined that the SIM card 1 is not the pluggable eSIM card.

S105: When determining that the SIM card 1 is not a pluggable eSIM card, the electronic device 100 normally interacts with the SIM card 1.

It may be understood that, in step S105, the electronic device 100 may normally interact with the SIM card 1 by using a conventional technical means. This is not specifically limited in embodiments of this application.

A sequence of performing step S102 and step S103 is not specifically limited in embodiments of this application. In another implementation, an eSIM identification module may alternatively first perform S103, to determine, based on the preset condition, whether the SIM card 1 is the eSIM card. If the SIM card 1 is not the eSIM card, the electronic device 100 performs S105, that is, the electronic device 100 normally interacts with the SIM card 1. If the SIM card 1 is the eSIM card, the electronic device 100 performs S102, that is, determines whether the eSIM card is the physical SIM card in the card slot. If the eSIM card is the physical SIM card, the electronic device 100 determines that the SIM card 1 is the pluggable eSIM card, and performs S104 to restrict the electronic device 100 from continuing to use the SIM card 1; or if the eSIM card is not the physical SIM card, the electronic device 100 determines that the SIM card 1 is not the pluggable eSIM card, and performs S105. In another implementation, the electronic device 100 may alternatively perform S102 and S103 simultaneously.

In Solution 1, the electronic device 100 may include a communication module 1 and an application processor, and a SIM card 1 is mounted. The communication module 1 includes an SCI driver and a modem, and the application processor includes an eSIM identification module. The following describes in detail four embodiments (namely, Embodiment 1 to Embodiment 4) of Solution 1.

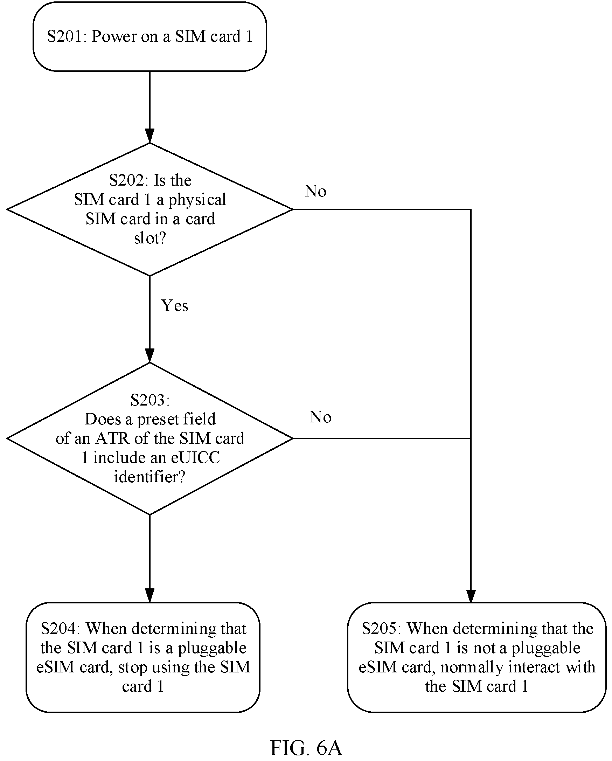

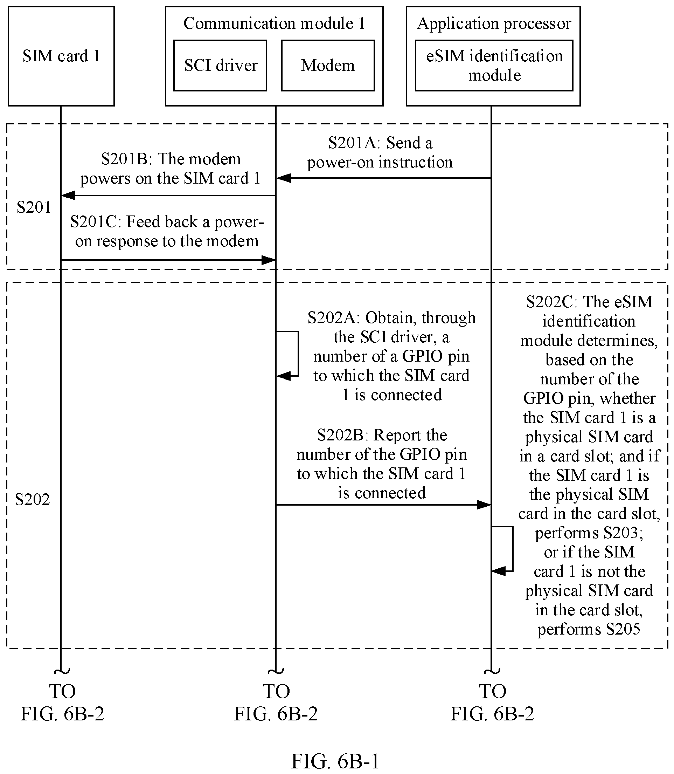

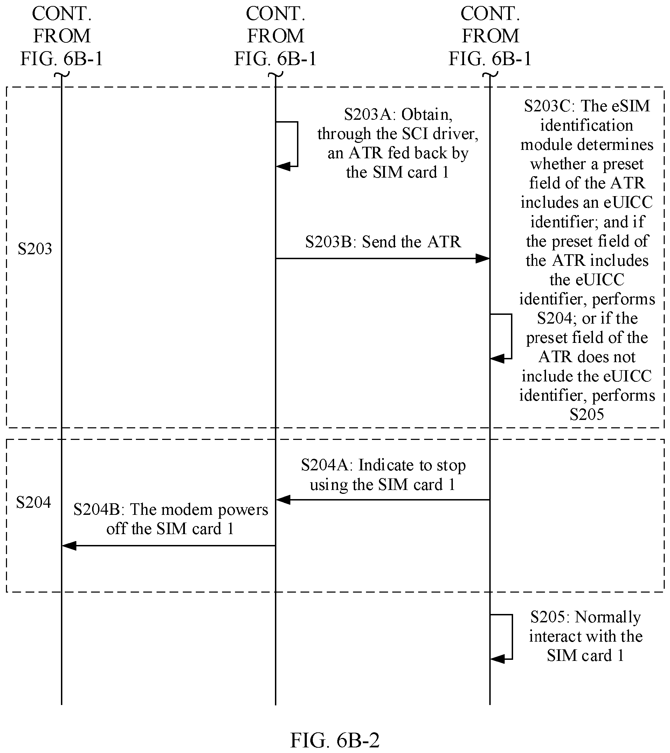

In Embodiment 1, the electronic device 100 may identify a pluggable eSIM card based on an eUICC identifier in a preset field of an ATR, to restrict use of the pluggable eSIM card. For example, FIG. 6A shows a method procedure of an eSIM card identification method. The method includes step S201 to step S205.

S201: The electronic device 100 powers on the SIM card 1.

In some embodiments, as shown in FIG. 6B-1 and FIG. 6B-2, step S201 may specifically include step S201A to step S201C.

S201A: The application processor sends a power-on instruction to the communication module 1.

S201B: The modem of the communication module 1 powers on the SIM card 1 based on the power-on instruction.

S201C: After being successfully powered on, the SIM card 1 feeds back a power-on response to the modem.

For example, as shown in FIG. 3A, the modem may power on the SIM card 1 through an SCI, and the SIM card 1 sends the power-on response to the modem through the SCI.

In some embodiments, the card slot includes a card holder, and there is an insertion detection sensor on the card holder. When the SIM card is inserted into a card slot, that is, when the SIM card is connected to a SIM card interface, the insertion detection sensor on the card holder detects that a level becomes high. When the SIM card is removed from the card slot, that is, the SIM card is not connected to the SIM card interface, the insertion detection sensor detects that a level becomes low. When detecting that a level of an interrupt PIN of the SIM card interface becomes high, the application processor indicates the modem to power on the SIM card 1 connected to the SIM card interface.

A specific implementation of powering on the SIM card 1 is not limited in embodiments of this application.

S202: The electronic device 100 determines whether the SIM card 1 is a physical SIM card in the card slot; and if the SIM card 1 is the physical SIM card in the card slot, performs S203; or if the SIM card 1 is not the physical SIM card in the card slot, performs S205.

In some embodiments, after detecting that the SIM card 1 is powered on, the electronic device 100 performs S202, that is, determines whether the SIM card 1 is the physical SIM card in the card slot. In an implementation, the SCI driver may determine a number of a GPIO pin (namely, an SCI hardware interface) that is of the communication module 1 and to which the SIM card 1 is connected. For example, the number of the GPIO pin indicates an SCI 0 or an SCI 1. The eSIM identification module may obtain the number of the GPIO pin, and then identify, based on the number, whether the SIM card is the physical SIM card in the SIM card slot.

For example, as shown in FIG. 6B-1 and FIG. 6B-2, step S202 may include S202A to S202C.

S202A: The communication module 1 obtains, through the SCI driver, the number of the GPIO pin that is of the communication module 1 and to which the SIM card 1 is connected.

S202B: The communication module 1 reports, to the application processor, the number of the GPIO pin to which the SIM card 1 is connected.

In an implementation, after the SIM card 1 is powered on, the communication module 1 automatically obtains and reports the number of the GPIO pin of the SIM card 1 through the SCI driver. In another implementation, after the SIM card 1 is powered on, the application processor delivers an instruction to the communication module 1; and the communication module 1 obtains and reports the number of the GPIO pin of the SIM card 1 based on the instruction through the SCI driver.

S202C: The eSIM identification module of the application processor determines, based on the number of the GPIO pin, whether the SIM card 1 is the physical SIM card in the card slot; and if the SIM card 1 is the physical SIM card in the card slot, performs S203; or if the SIM card 1 is not the physical SIM card in the card slot, performs S205.

In some embodiments, when the GPIO pin to which the SIM card 1 is connected is connected to a SIM switch, the SCI driver of the communication module 1 in step S202A further obtains a switch state of the SIM switch, and the communication module 1 in step S202B further reports the switch state of the SIM switch to the application processor; and in step S202C, the eSIM identification module determines, based on the number of the GPIO pin and the switch state of the SIM switch, whether the SIM card 1 is the physical SIM card in the card slot.

For a specific implementation of step S202C, refer to the related descriptions of step S102. Details are not described herein again.

S203: The electronic device 100 detects whether the preset field of the ATR of the SIM card 1 includes the eUICC identifier; and if the preset field of the ATR of the SIM card 1 includes the eUICC identifier, performs S204; or if the preset field of the ATR of the SIM card 1 does not include the eUICC identifier, performs S205.

The ATR is a byte sequence. When powering on the SIM card 1, the electronic device 100 sends a reset command to the SIM card 1. After the SIM card 1 is powered on, the SIM card 1 returns the ATR to a sender of the reset command, where the ATR is an answer to reset of the SIM card 1 to the reset command. If the SIM card 1 is an eSIM card, the eUICC identifier is carried in the preset field (for example, a Tbi field or a Terminal Capability field) of the ATR.

In some embodiments, the communication module 1 may obtain, through the SCI driver, interaction information between the SIM card 1 and the modem, for example, the power-on response. After detecting, through the SCI driver, the power-on response fed back by the SIM card 1, the communication module 1 may send the power-on response to the application processor, where the power-on response includes the ATR. The eSIM identification module of the application processor may parse whether the preset field of the ATR of the SIM card 1 includes the eUICC identifier. In this embodiment of this application, the communication module 1 may alternatively obtain the ATR in the power-on response, and send only the ATR to the eSIM identification module of the application processor; or the communication module 1 may obtain the preset field of the ATR in the power-on response, and send only the preset field to the eSIM identification module of the application processor. This is not specifically limited herein.

In some embodiments, as shown in FIG. 6B-1 and FIG. 6B-2, step S203 specifically includes S203A to S203C.

S203A: The communication module 1 obtains, through the SCI driver, the ATR fed back by the SIM card 1.

S203B: The communication module 1 sends, to the application processor, the ATR fed back by the SIM card 1.

S203C: The eSIM identification module of the application processor determines whether the preset field of the ATR includes the eUICC identifier; and if the preset field of the ATR includes the eUICC identifier, performs S204; or if the preset field of the ATR does not include the eUICC identifier, performs S205.

The eSIM identification module may parse the ATR fed back by the SIM card 1, to determine whether the preset field of the ATR includes the eUICC identifier. For example, the preset field is the Tbi field. Table 1 shows a Tbi field of an ATR. As shown in Table 1, when a b2 bit (bit) of the Tbi field is 1, it indicates that the SIM card 1 supports an eUICC-related function, and the SIM card 1 is the eSIM card. It may be understood that, when a b2 byte of the Tbi field is 1, the Tbi field includes the eUICC identifier.

**Table 1**

| b8 | b7 | b6 | b5 | b4 | b3 | b2 | b1 | Description |
|---|---|---|---|---|---|---|---|---|
| 0 | 0 | 0 | 0 | 0 | 0 | 0 | 0 | An additional global interface parameter is not supported |
| 1 | | | 1 | | | | | An available low-impedance driver and protocol on a 1/O line |
| 1 | 1 | | | | | | | A USB UICC-terminal interface between chips is supported as defined in ETSI TS 102600 |
| 1 | | 1 | | | | | | A UICC-CLF interface is supported as defined in ETSI TS 102613 |
| 1 | | | | 1 | | | | A secure channel is supported as defined in ETSI TS 102484 |
| 1 | | | | 1 | 1 | | | A secure APDU-platform to platform is required as defined in ETSI TS 102484 |
| 1 | | | | | | 1 | | An eUICC-related function is supported as defined in GSMA SGP.22 |
| 1 | | | | | | | 1 | Supported LSIs |
| Note: Any other value is RFU | | | | | | | | |

In some embodiments, before step S203A, the eSIM identification module of the application processor sends an instruction to the communication module 1; and the communication module 1 performs S203A and S203B based on the instruction, detects, through the SCI driver, the preset field of the ATR fed back by the SIM card 1, and reports the preset field to the eSIM identification module.

S204: When determining that the SIM card 1 is a pluggable eSIM card, the electronic device 100 stops using the SIM card 1.

It may be understood that, if the SIM card 1 is the physical card in the card slot, and the eUICC identifier is carried in the preset field of the ATR fed back by the SIM card 1, the electronic device 100 identifies the SIM card 1 as the pluggable eSIM card, and the electronic device 100 stops using the pluggable eSIM card.

In some embodiments, as shown in FIG. 6B-1 and FIG. 6B-2, step S204 specifically includes S204A and S204B.

S204A: The application processor indicates the communication module 1 to stop using the SIM card 1.

S204B: The modem of the communication module 1 powers off the SIM card 1.

For example, as shown in FIG. 3A to FIG. 3E, the modem powers off the SIM card 1 in the card slot through the SCI and the SIM card interface.

S205: When determining that the SIM card 1 is not a pluggable eSIM card, the electronic device 100 normally interacts with the SIM card 1.

It should be noted that for specific implementations of step S201 to step S205, refer to the related descriptions of step S101 to step S105. Details are not described herein again.

In some embodiments, a software system (for example, an Android system) of the electronic device 100 does not have a built-in native LPA (namely, LPAd), and the eSIM card cannot be directly managed through the built-in native LPA. On a device that does not support the native LPA, a third-party application may manage the eSIM card through an OMAPI. The OMAPI is a standard interface provided by Android for an external secure element (Secure Element, SE).

In an implementation, the eUICC uses an ARA-M field to store an SHA-1 or SHA-256 value of an Android developer certificate, to notify the Android system of which applications can access the eUICC, and allow the applications to obtain carrier privileges (Carrier Privileges). The ARA-M is a security mechanism that is used to declare read and write permission on data in the SE, to ensure that the data can be operated only by an authorized application. Therefore, the user can manage the eUICC only by using the specific third-party application through the OMAPI. The specific third-party application has use permission to manage the eSIM card through the OMAPI, and may be understood as an LPA installed in a form of user app. For ease of description, an application that has the use permission to manage the eSIM card through the OMAPI is referred to as an authorized application for short hereinafter.

In some embodiments, if the electronic device 100 detects that an application that invokes the OMAPI is an authorized application of the eSIM card, the electronic device 100 may determine that a SIM card accessed by invoking the OMAPI is the eSIM card. It may be understood that if the application that invokes the OMAPI is not the authorized application of the eSIM card, it indicates that the application does not access the eSIM card through the OMAPI.

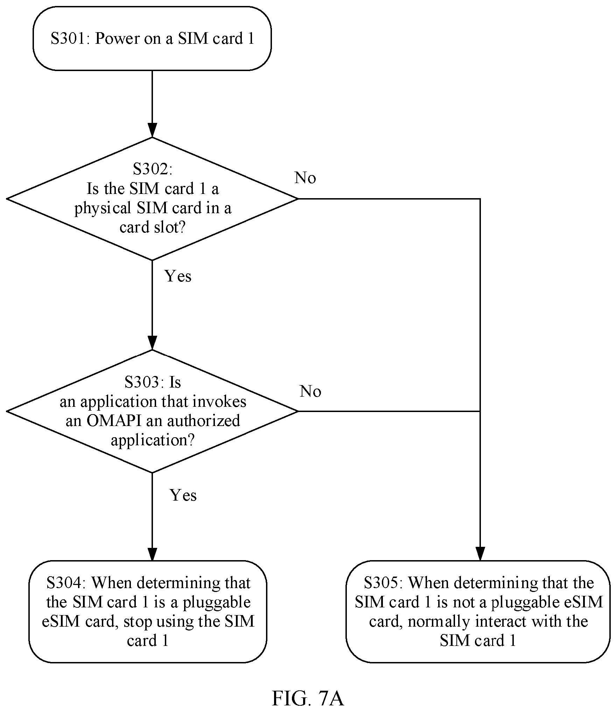

In Embodiment 2, the electronic device 100 may identify, based on an authorized application that invokes an OMAPI to access the SIM card 1, a pluggable eSIM card, and restrict use of the pluggable eSIM card. For example, FIG. 7A shows a method procedure of another eSIM card identification method. The method includes step S301 to step S305.

S301: The electronic device 100 powers on the SIM card 1.

For a specific implementation of step S301, refer to the related descriptions of step S201. Details are not described herein again.

S302: The electronic device 100 determines whether the SIM card 1 is a physical SIM card in a card slot; and if the SIM card 1 is the physical SIM card in the card slot, performs S303; or if the SIM card 1 is not the physical SIM card in the card slot, performs S305.

For a specific implementation of step S302, refer to the related descriptions of step S202. Details are not described herein again.

S303: The electronic device 100 detects whether an application that invokes the OMAPI is an authorized application of an eSIM card; and if the application that invokes the OMAPI is the authorized application of the eSIM card, performs S304; or if the application that invokes the OMAPI is not the authorized application of the eSIM card, performs S305.

In this embodiment of this application, the authorized application of the eSIM card in the electronic device 100 may invoke the OMAPI to establish a logical channel between the modem and the eSIM card, and then interact with the eSIM card based on the logical channel, to manage the eSIM card and perform a mobile communication service. In some use scenarios, only the authorized application is allowed to invoke the OMAPI for interaction with the eSIM card. The authorized application satisfies a part or all of the following features: The authorized application is an application in a preset trustlist, and has a system signature encrypted by using a preset encryption key.

In an implementation, the system signature of the authorized application downloaded through a preset path is encrypted by using the preset encryption key. For example, the preset path is an application market that is built in a system of the electronic device 100.

In some embodiments, the electronic device 100 may invoke the OMAPI to establish logical channels with different SEs (such as a SIM card and an SD card), and numbers of the logical channels corresponding to the different SEs are different. For example, a number of a logical channel established with the SIM card is 0. If the electronic device 100 detects that the number of the logical channel established with the SE by invoking the OMAPI is 0, the electronic device 100 determines whether the application that invokes the OMAPI is the authorized application of the eSIM card.

In some embodiments, after it is determined that the SIM card 1 is the physical SIM card in the card slot in step S302, if the electronic device 100 detects that the application that invokes the OMAPI is the authorized application of the eSIM card, the electronic device 100 may determine that the SIM card 1 is the pluggable eSIM card.

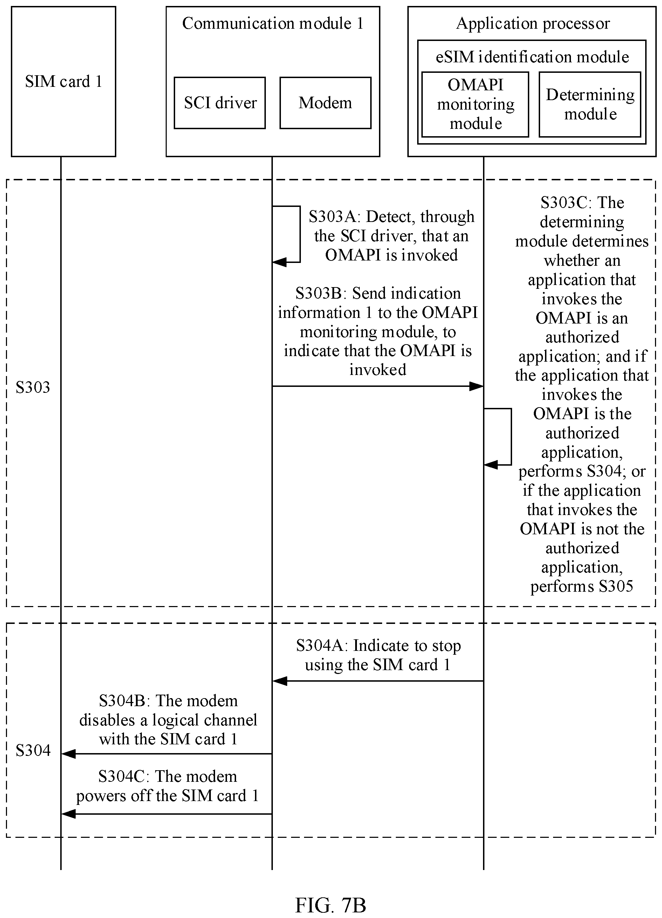

In some embodiments, the eSIM identification module of the application processor may include an OMAPI monitoring module and a determining module. As shown in FIG. 7B, step S303 may specifically include S303A to S303C.

S303A: The communication module 1 detects, through the SCI driver, that the OMAPI is invoked.

In some embodiments, the electronic device 100 invokes the OMAPI to establish the logical channel between the modem and the eSIM card. The SCI driver of the communication module 1 may obtain interaction information between the SIM card 1 and the modem, for example, information related to establishing the logical channel by invoking the OMAPI.

In some embodiments, before step S303A, the OMAPI monitoring module of the application processor sends an instruction to the communication module 1; and the communication module 1 performs S303A based on the instruction, that is, monitors, through an SCI, whether the OMAPI is invoked.

In some embodiments, in step S303A, if the communication module 1 detects, through the SCI driver, request information 1 for invoking the OMAPI and response information 1, S303B is performed. The request information 1 is used to request to perform a related operation of the SIM card 1, and the response information 1 is used to respond to the request information 1, to indicate that the request information 1 has been successfully processed.

S303B: The communication module 1 sends indication information 1 to the application processor, to indicate, to the OMAPI monitoring module, that the OMAPI is invoked.

S303C: The determining module of the application processor determines whether the application (for example, an application 1) that invokes the OMAPI is the authorized application; and if the application that invokes the OMAPI is the authorized application, performs S304; or if the application that invokes the OMAPI is not the authorized application, performs S305.

In some embodiments, after step S303B and before step S303C, the OMAPI monitoring module of the application processor sends an instruction to the determining module based on the indication information 1; and the determining module performs S303C based on the instruction, that is, determines whether the application 1 that invokes the OMAPI is the authorized application.

In some embodiments, the determining module may obtain a preset trustlist, where the preset trustlist stores a list of the authorized application. If the application 1 that invokes the OMAPI is an application in the preset trustlist, the determining module determines that the application 1 is the authorized application of the eSIM card; or if the application 1 that invokes the OMAPI is not an application in the preset trustlist, the determining module determines that the application 1 is not the authorized application of the eSIM card. In an implementation, the preset trustlist stores an application identifier of the authorized application (for example, a package name of an application package of the authorized application). If the application identifier of the application 1 belongs to the preset trustlist, it is determined that the application 1 is the authorized application.

In some embodiments, the determining module may obtain a decryption key of the system signature of the authorized application; and if verification on the system signature of the application 1 by using the decryption key succeeds, determine that the application 1 is the authorized application of the eSIM card; or if verification on the system signature of the application 1 by using the decryption key fails, determine that the application 1 is not the authorized application.

S304: When determining that the SIM card 1 is a pluggable eSIM card, the electronic device 100 stops using the SIM card 1.

It may be understood that, if the SIM card 1 is the physical card in the card slot, and the application 1 that invokes the OMAPI is the authorized application of the eSIM card, the electronic device 100 identifies the SIM card 1 as the pluggable eSIM card, and the electronic device 100 stops using the pluggable eSIM card. In some embodiments, as shown in FIG. 7B, step S304 specifically includes S304A and a part or all of step S304B and step S304C.

S304A: The application processor indicates the communication module 1 to stop using the SIM card 1.

S304B: The modem of the communication module 1 disables a logical channel between the modem and the SIM card 1.

S304C: The modem of the communication module 1 powers off the SIM card 1.

For example, as shown in FIG. 3A to FIG. 3E, the modem powers off the SIM card 1 in the card slot through the SCI and the SIM card interface.

In some embodiments, the electronic device 100 may alternatively perform only step S304B or step S304C, to restrict the electronic device 100 from continuing to use the SIM card 1. For example, step S304B is optional, and use of the SIM card 1 may be restricted only by powering off the SIM card 1. For example, step S304C is optional, and the electronic device 100 may be restricted from accessing mobile communication by using the SIM card 1 only by disabling the logical channel with the SIM card 1.

In some embodiments, step S304 specifically includes: The application processor indicates the modem of the communication module 1 to disable the logical channel with the SIM card 1, and the modem performs S304C; and the application processor indicates the modem of the communication module 1 to power off the SIM card 1, and the modem performs S304CD.

S305: When determining that the SIM card 1 is not a pluggable eSIM card, the electronic device 100 normally interacts with the SIM card 1.

It should be noted that for a specific implementation of step S305, refer to the related descriptions of step S205. Details are not described herein again.

In this embodiment of this application, the eSIM card may store profiles of a plurality of eSIMs of an operator, A profile of an eSIM may independently form one SIM application, and each SIM application is equivalent to a function of one SIM card. Some profiles (namely, SIM applications) in the eSIM card are specific to the eSIM card and are not included in a conventional SIM, such as an ISD-P, an ISD-R, an ECASD, and an LPA. It may be understood that, if it is detected that the electronic device 100 successfully selects a SIM application specific to the eSIM, it may be determined that the eSIM card is currently used.

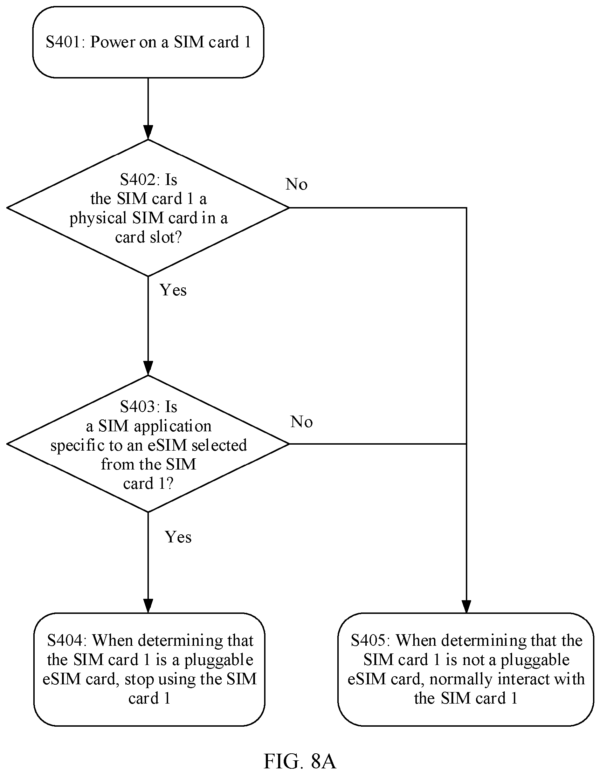

In Embodiment 3, the electronic device 100 may identify a pluggable eSIM card based on a SIM application that is specific to an eSIM and that is selected from a SIM card, to restrict use of the pluggable eSIM card. For example, FIG. 8A shows a method procedure of an eSIM card identification method. The method includes step S401 to step S405.

S401: The electronic device 100 powers on the SIM card 1.

For a specific implementation of step S401, refer to the related descriptions of step S201. Details are not described herein again.

S402: The electronic device 100 determines whether the SIM card 1 is a physical SIM card in a card slot; and if the SIM card 1 is the physical SIM card in the card slot, performs S403; or if the SIM card 1 is not the physical SIM card in the card slot, performs S405.

For a specific implementation of step S402, refer to the related descriptions of step S202. Details are not described herein again.

S403: The electronic device 100 detects whether the SIM application specific to the eSIM is selected from the SIM card 1; and if the SIM application specific to the eSIM is selected from the SIM card 1, performs S404; or if the SIM application specific to the eSIM is not selected from the SIM card 1, performs S405.

In some embodiments, SIM applications in the SIM card corresponds to different AIDs. Detecting whether the SIM application specific to the eSIM is selected from the SIM card 1 specifically includes: detecting whether an AID of the SIM application specific to the eSIM is selected from the SIM card 1.

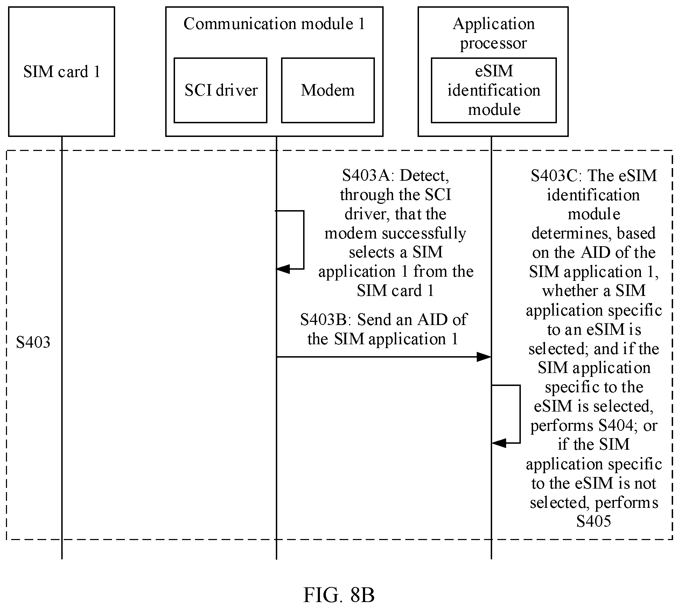

In some embodiments, as shown in FIG. 8B, step S403 specifically includes S403A to S403C.

S403A: The communication module 1 detects, through the SCI driver, that the modem successfully selects a SIM application 1 from the SIM card 1.

In some embodiments, in step S403A, if the communication module 1 detects, through the SCI driver, request information 2 for selecting the SIM application 1 and response information 2, S403B is performed. The response information 2 is used to respond to the request information 2, to indicate that the SIM application 1 is successfully selected.

In this embodiment of this application, the SIM application 1 may also be referred to as a first SIM application.

S403B: The communication module 1 sends an AID of the SIM application 1 to the application processor.

S403C: The eSIM identification module of the application processor determines, based on the AID of the SIM application 1, whether the SIM application specific to the eSIM is selected; and if the SIM application specific to the eSIM is selected, performs S404; or if the SIM application specific to the eSIM is not selected, performs S405.

It may be understood that, if the AID of the SIM application 1 is the AID of the SIM application specific to the eSIM, it is determined that the SIM application specific to the eSIM is selected.

In some embodiments, before step S403A, the application processor sends an instruction to the communication module 1; and the communication module 1 performs S403A based on the instruction, that is, detects, through the SCI driver, the SIM application selected from the SIM card 1.

In some embodiments, step S403 specifically includes: The application processor sends an instruction to the communication module 1, where the instruction is used to instruct the communication module 1 to actively attempt to select, from the SIM card 1, the SIM application specific to the eSIM, for example, an ISD-P, an ISD-R, an ECASD, or an LPA. The LPA is used as an example. The modem of the communication module 1 actively selects the LPA from the SIM card 1 based on the instruction; the SIM card 1 feeds back response information 3 to the modem, where the response information 3 indicates whether the LPA is successfully selected; after detecting the response information 3 through the SCI driver, the communication module 1 sends response information 4 to the application processor, where the response information 4 indicates whether the LPA is successfully selected; and if the response information 4 indicates that the LPA is successfully selected, the eSIM identification module of the application processor determines that the SIM application specific to the eSIM is selected from the SIM card 1, and performs S404; or if the response information 4 indicates that the LPA is not successfully selected, the eSIM identification module of the application processor performs S405. The response information 4 may include an AID of the LPA.

S404: When determining that the SIM card 1 is a pluggable eSIM card, the electronic device 100 stops using the SIM card 1.

It may be understood that, if the SIM card 1 is the physical card in the card slot, and the SIM application specific to the eSIM is successfully selected from the SIM card 1, the electronic device 100 identifies the SIM card 1 as the pluggable eSIM card, and the electronic device 100 stops using the pluggable eSIM card.

For a specific implementation of step S404, refer to the related descriptions of step S204 and step S304. Details are not described herein again.

S405: When determining that the SIM card 1 is not a pluggable eSIM card, the electronic device 100 normally interacts with the SIM card 1.

For a specific implementation of step S405, refer to the related descriptions of step S205. Details are not described herein again.

In this embodiment of this application, after the SIM card 1 is powered on, the modem may send an APDU packet to the SIM card 1. The APDU packet may include at least one APDU instruction, and the APDU instruction may be used to write APDU data into the SIM card 1, query related information of a profile (for example, a quantity of currently activated profiles and an identifier of the profile) in the SIM card, and the like. When the modem interacts with the eSIM card through the APDU packet, the APDU packet may include an instruction that is specific to the eSIM and that is not included in a conventional SIM (referred to as an eSIM-specific instruction for short in the following for ease of description), for example, an instruction for writing a profile, an instruction for erasing a profile, or an instruction for downloading a profile. The eSIM-specific instruction is not specifically limited in embodiments of this application. It may be understood that, if it is detected that an APDU header for interaction with the SIM card 1 includes the eSIM-specific instruction (for example, BF2D Get Profile), it may be determined that the currently used SIM card 1 is the eSIM card.

In this embodiment of this application, the APDU packet may also be referred to as an APDU command or an APDU instruction set. This is not specifically limited herein.

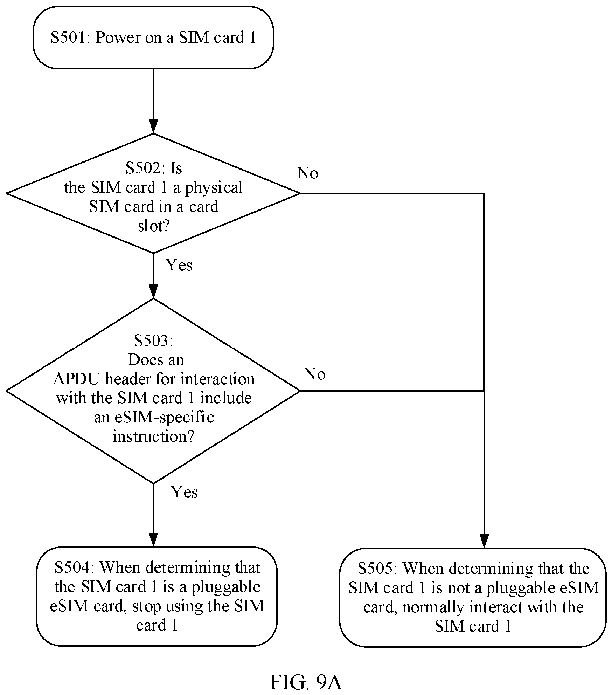

In Embodiment 4, the electronic device 100 may identify a pluggable eSIM card based on an eSIM-specific instruction in an APDU instruction set of a SIM card, and then control the pluggable eSIM card to be powered off. For example, FIG. 9A shows a method procedure of an eSIM card identification method. The method includes step S501 to step S505.

S501: The electronic device 100 powers on the SIM card 1.

For a specific implementation of step S501, refer to the related descriptions of step S201. Details are not described herein again.

S502: The electronic device 100 determines whether the SIM card 1 is a physical SIM card in a card slot; and if the SIM card 1 is the physical SIM card in the card slot, performs S503; or if the SIM card 1 is not the physical SIM card in the card slot, performs S505.

For a specific implementation of step S502, refer to the related descriptions of step S202. Details are not described herein again.

S503: The electronic device 100 determines whether an APDU header (Header) for interaction with the SIM card 1 includes the eSIM-specific instruction; and if the APDU header for interaction with the SIM card 1 includes the eSIM-specific instruction, performs S504; or if the APDU header for interaction with the SIM card 1 does not include the eSIM-specific instruction, performs S505.

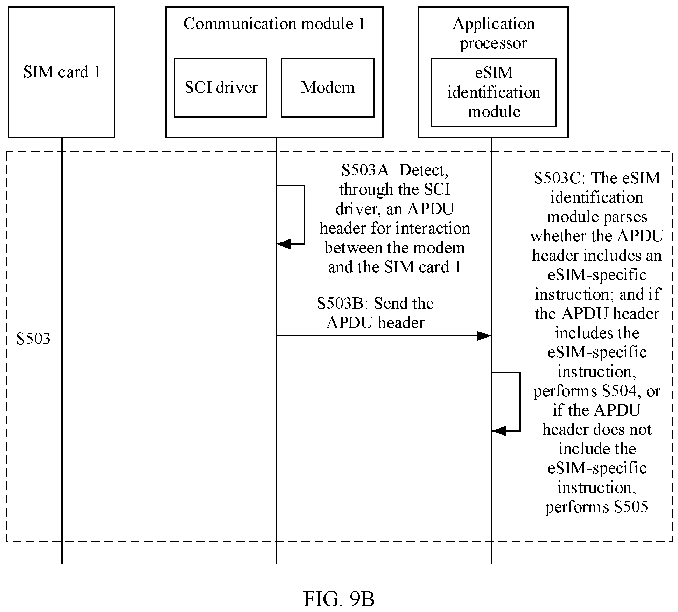

In some embodiments, as shown in FIG. 9B, step S503 specifically includes S503A to S503C.

S503A: The communication module 1 detects, through the SCI driver, the APDU header for interaction between the modem and the SIM card 1.

An APDU packet includes the APDU header, and the APDU header indicates an instruction included in the APDU packet. The communication module 1 may monitor, in real time through the SCI driver, the APDU header transmitted on an ISO 7816 standard interface. In an implementation, the APDU header includes an operator of the instruction, and the electronic device 100 may determine, based on the operator, the instruction included in the APDU packet.

S503B: The communication module 1 sends the APDU header to the application processor.

S503C: The eSIM identification module of the application processor parses whether the APDU header includes the eSIM-specific instruction; and if the APDU header includes the eSIM-specific instruction, performs S504; or if the APDU header does not include the eSIM-specific instruction, performs S505.

In some embodiments, before step S503A, the eSIM identification module of the application processor sends an instruction to the communication module 1; and the communication module 1 performs S503A based on the instruction, that is, detects, through the SCI driver, the APDU header for interaction between the modem and the SIM card 1.

In some embodiments, step S503 specifically includes: The communication module 1 detects and parses the APDU header of the APDU packet for interaction between the modem and the SIM card 1 through the SCI driver; when the APDU header includes the eSIM-specific instruction, detects a response packet of the APDU packet; and if the response packet of the APDU packet is detected, and the response packet indicates that the APDU packet has been processed, that is, the eSIM-specific instruction in the APDU packet has been executed, the communication module 1 sends response information 5 to the application processor, where the response information 5 indicates that the eSIM-specific instruction is executed.

The eSIM identification module of the application processor determines, based on the response information 5, to perform S504. It may be understood that if the response information 5 is not received, the application processor maintains normal interaction with the SIM card 1.

S504: When determining that the SIM card 1 is a pluggable eSIM card, the electronic device 100 stops using the SIM card 1.

It may be understood that, if the SIM card 1 is the physical card in the card slot, and the eSIM-specific instruction is detected in an APDU for interaction with the SIM card 1, the electronic device 100 identifies the SIM card 1 as the pluggable eSIM card, and the electronic device 100 stops using the pluggable eSIM card.

For a specific implementation of step S504, refer to the related descriptions of step S204 and step S304. Details are not described herein again.

S505: When determining that the SIM card 1 is not a pluggable eSIM card, the electronic device 100 normally interacts with the SIM card 1.

For a specific implementation of step S505, refer to the related descriptions of step S205. Details are not described herein again.

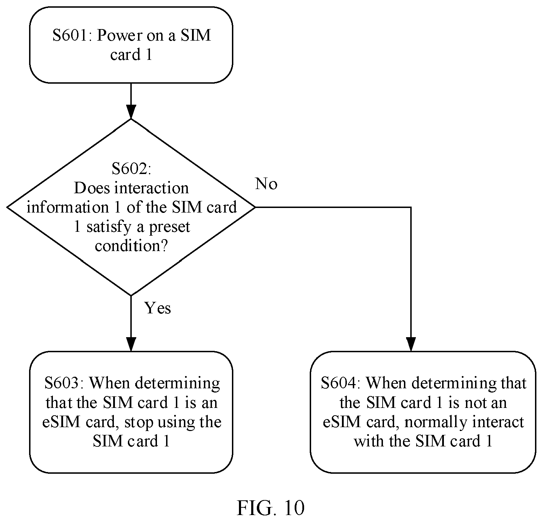

In Solution 2 provided in embodiments of this application, an electronic device 100 may effectively identify whether a powered-on SIM card is an eSIM card, to restrict use of the eSIM card. For example, FIG. 10 shows a method procedure of an eSIM card identification method. The method includes step S601 to step S604.

S601: The electronic device 100 powers on a SIM card 1.

For a specific implementation of step S601, refer to the related descriptions of step S101. Details are not described herein again.

S602: The electronic device 100 determines whether interaction information 1 of the SIM card 1 satisfies a preset condition; and if the interaction information 1 of the SIM card 1 satisfies the preset condition, performs S603; or if the interaction information 1 of the SIM card 1 does not satisfy the preset condition, performs S604.

If the interaction information 1 of the SIM card 1 satisfies the preset condition, it indicates that the SIM card 1 is the eSIM card; or if the interaction information 1 of the SIM card 1 does not satisfy the preset condition, the SIM card 1 is not the eSIM card. For a specific implementation of step S602, refer to the related descriptions of step S103. Details are not described herein again.

S603: When determining that the SIM card 1 is the eSIM card, the electronic device 100 stops using the SIM card 1.

For a specific implementation of step S603, refer to the related descriptions of step S104. Details are not described herein again.

S604: When determining that the SIM card 1 is not the eSIM card, the electronic device 100 normally interacts with the SIM card 1.

For a specific implementation of step S604, refer to the related descriptions of step S105. Details are not described herein again.

Implementations of this application may be randomly combined to achieve different technical effects.

All or some of the foregoing embodiments may be implemented by using software, hardware, firmware, or any combination thereof. When software is used for implementation, all or some of embodiments may be implemented in a form of computer program product. The computer program product includes one or more computer instructions. When the computer program instructions are loaded and executed on a computer, the procedure or functions according to this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

A person of ordinary skill in the art may understand that all or some of the procedures of the methods in embodiments may be implemented by a computer program instructing related hardware. The program may be stored in a computer-readable storage medium. When the program is executed, the procedures in the foregoing method embodiments may be performed. The foregoing storage medium includes any medium that can store program code, for example, a ROM, a random access memory RAM, a magnetic disk, or an optical disc.

In conclusion, the foregoing descriptions are merely embodiments of the technical solutions of the present invention, but are not intended to limit the protection scope of the present invention. Any modification, equivalent replacement, improvement, or the like made according to the disclosure of the present invention shall fall within the protection scope of the present invention.

## Claims

1. An embedded subscriber identity module eSIM identification method, applied to an electronic device, wherein the method comprises:
powering on a first subscriber identity module SIM card; and
when the first SIM card is identified as a pluggable eSIM card, stopping using the pluggable eSIM card.

2. The method according to claim 1, wherein the method further comprises:
when detecting that the first SIM card is a physical SIM card in a card slot and that interaction information of the first SIM card satisfies a preset condition, identifying the first SIM card as the pluggable eSIM card, wherein that the interaction information of the first SIM card satisfies the preset condition indicates that the first SIM card is an eSIM card.

3. The method according to claim 1, wherein the preset condition comprises a part or all of the following conditions:
a first condition, comprising: a preset field of an answer to reset ATR of the first SIM card comprises an eSIM identifier;
a second condition, comprising: an application that invokes an open mobile application programming interface OMAPI for interaction with the first SIM card is an authorized application of the eSIM card;
a third condition, comprising: a SIM application specific to the eSIM is selected from the first SIM card; and
a fourth condition, comprising: an application protocol data unit APDU header for interaction with the first SIM card comprises an eSIM-specific instruction.

4. The method according to claim 2 or 3, wherein the electronic device comprises a first communication module and an application processor, the first communication module comprises a modem, the interaction information of the first SIM card comprises the ATR, and detecting that the interaction information of the first SIM card satisfies the first condition comprises:
after the modem powers on the first SIM card, obtaining, by the first communication module, the ATR fed back by the first SIM card to the modem;
sending, by the first communication module, the ATR to the application processor; and
detecting, by the application processor, that the preset field of the ATR comprises the eSIM identifier.

5. The method according to any one of claims 2 to 4, wherein the electronic device comprises the first communication module and the application processor, the first communication module comprises the modem, the interaction information of the first SIM card comprises the application that invokes the OMAPI for interaction with the first SIM card, and detecting that the interaction information of the first SIM card satisfies the second condition comprises:
after the modem powers on the first SIM card, when detecting that the OMAPI is invoked, notifying, by the first communication module, the application processor that the OMAPI is invoked; and
detecting, by the application processor, that the application that invokes the OMAPI is the authorized application of the eSIM card.

6. The method according to claim 5, wherein the authorized application of the eSIM card satisfies a part or all of the following features: the authorized application is an application in a preset trustlist, and has a system signature encrypted by using a preset encryption key.

7. The method according to any one of claims 2 to 6, wherein the electronic device comprises the first communication module and the application processor, the interaction information of the first SIM card comprises an application identifier AID of a SIM application selected from the first SIM card, and detecting that the interaction information of the first SIM card satisfies the third condition comprises:
determining, by the first communication module, an AID of a first SIM application selected from the first SIM card;
sending, by the first communication module, the AID of the first SIM application to the application processor; and
detecting, by the application processor based on the AID, that the first SIM application is the SIM application specific to the eSIM.

8. The method according to claim 7, wherein the SIM application specific to the eSIM comprises: an issuer security domain-profile ISD-P, an issuer security domain-root ISD-R, an eUICC controlling authority security domain ECASD, a local profile assistant LPA, and the like.

9. The method according to any one of claims 2 to 8, wherein the electronic device comprises the first communication module and the application processor, the first communication module comprises the modem, the interaction information of the first SIM card comprises the APDU header for interaction with the first SIM card, and detecting that the interaction information of the first SIM card satisfies the fourth condition comprises:
obtaining, by the first communication module, an APDU header for interaction between the first SIM card and the modem;
sending, by the first communication module, the APDU header to the application processor; and
detecting, by the application processor, that the APDU header comprises the eSIM-specific instruction.

10. The method according to any one of claims 2 to 9, wherein the electronic device comprises the first communication module and the application processor, and the method further comprises:
after the first SIM card is powered on, determining, by the first communication module, a number of a general-purpose input/output GPIO pin that is of the communication module and to which the first SIM card is connected; and
sending, by the first communication module, the number of the GPIO pin to the application processor; and
detecting that the first SIM card is the physical SIM card in the card slot comprises:
determining, by the application processor based on the number of the GPIO pin, that the first SIM card is the physical SIM card in the card slot.

11. The method according to claim 10, wherein when the GPIO pin connected to the first SIM card corresponds to a SIM switch, the method further comprises:
determining, by the first communication module, a switch state of the SIM switch; and
sending, by the first communication module, the switch state of the SIM switch to the application processor; and
detecting that the first SIM card is the physical SIM card in the card slot comprises:
determining, by the application processor based on the number of the GPIO pin and the switch state of the SIM switch, that the first SIM card is the physical SIM card in the card slot.

12. The method according to any one of claims 1 to 11, wherein stopping using the pluggable eSIM card comprises:
disabling a logical channel between the pluggable eSIM card and the modem; and/or powering off the pluggable eSIM card.

13. An electronic device, comprising a processor and a memory, wherein the memory is coupled to the processor, the memory is configured to store computer program code, the computer program code comprises computer instructions, and when the processor reads the computer instructions from the memory, the electronic device is enabled to perform the eSIM identification method according to any one of claims 1 to 12.

14. A computer-readable storage medium, comprising computer instructions, wherein when the computer instructions are run on a server, an electronic device is enabled to perform the eSIM identification method according to claims 1 to 12.

15. A computer program product, wherein when the computer program product runs on a computer, the computer is enabled to perform the eSIM identification method according to claims 1 to 12.
